# EUROPEAN PATENT APPLICATION

(11) **EP 4 817 709 A1**
(43) Date of publication of application: **07.10.2026**
(21) Application number: 26169351.9
(22) Date of filing: 31.03.2026
(51) Int. Cl.: A63F 13/285, A63F 13/28, A63F 13/54

(54) **VIBRATION CONTROL SYSTEM, COMPUTER PROGRAM, AND METHOD**

(30) Priority: 01.04.2025 JP 2025060828
(71) Applicant: Nintendo Co., Ltd., Kyoto-shi, Kyoto 601-8501 (JP)
(72) Inventor: AOKI, Takafumi, Kyoto 601-8501 (JP)
(74) Representative: Lorenz Seidler Gossel Part. mbB

(57) **Abstract**

A vibration control system (10) includes a vibration device configured to reproduce audio frequencies, one or more processors, and one or more memories. The one or more memories store instructions that, when executed by the one or more processors, cause the one or more processors to perform operations comprising: issuing a streaming playback instruction by sequentially specifying PCM data of a specified sampling rate; and controlling the vibration device using the sequentially acquired PCM data in response to the streaming playback instruction.

## Description

The present disclosure relates to a vibration control system, a computer program, and a method.

Conventionally, there is a game system that gives a vibration effect to a user playing a game.

### SUMMARY

There has been room for improvement regarding the utilization of conventional vibration systems.

(Configuration 1) An exemplary embodiment provides a vibration control system comprising a vibration device capable of reproducing audio frequencies, one or more processors, and one or more memories. The one or more memories store instructions that, when executed by the one or more processors, cause the one or more processors to perform operations comprising: issuing a streaming playback instruction by sequentially specifying PCM data of a specified sampling rate; and controlling the vibration device using the sequentially acquired PCM data in response to the streaming playback instruction.

(Configuration 2) In Configuration 1, the specified sampling rate of the PCM data is the same as an update cycle of control data used for the controlling.

(Configuration 3) In Configuration 1, the specified sampling rate of the PCM data is the same as a sampling rate of an amplifier that controls the vibration device.

(Configuration 4) In Configuration 1, the operations further comprise issuing a vibration instruction by specifying an amplitude and a frequency, and the controlling further comprises generating control data of the vibration device at a specified cycle based on the specified amplitude and the frequency according to the vibration instruction, and further controlling the vibration device using the control data.

(Configuration 5) In Configuration 4, an audio frequency is specified in the vibration instruction.

(Configuration 6) In Configuration 5, the vibration control system comprises an information processing apparatus and a controller. The information processing apparatus comprises one or more processors and one or more memories storing instructions that cause the one or more processors of the information processing apparatus to perform first operations comprising transmitting sound identification information and sound data to the controller and issuing a preset playback instruction by specifying the sound identification information. The controller comprises one or more processors and one or more memories storing instructions that cause the one or more processors of the controller to perform second operations comprising storing the transmitted sound identification information and the transmitted sound data received from the information processing apparatus in the one or more memories in association with each other. The controlling is performed by reading the sound data corresponding to the specified sound identification information from the one or more memories of the controller according to the preset playback instruction.

(Configuration 7) In Configuration 4, the vibration control system comprises a system program and an application program, wherein the issuing the streaming playback instruction is performed in response to a request from the application program via a first API by the system program, and the issuing the vibration instruction is performed in response to a request from the application program via a second API by the system program.

(Configuration 8) In Configuration 4, the vibration instruction is configured to specify the amplitude and the frequency at a first period, the control data is generated to have a second period shorter than the first period, and the specified sampling rate of the PCM data is the same as the second period.

(Configuration 9) In Configuration 4, the control based on the streaming playback instruction and the control based on the vibration instruction are exclusively controlled.

(Configuration 10) In Configuration 6, the control based on the streaming playback instruction, the control based on the preset playback instruction, and the control based on the vibration instruction are exclusively controlled.

(Configuration 11) In Configuration 1, the vibration control system comprises an information processing apparatus and a controller, the controller comprising an input device. The second operations comprise determining whether a specified operation is received at the input device and controlling the vibration device based on first data stored in the one or more memories of the controller, and the control based on the specified operation is synthesized with the control based on the streaming playback instruction.

(Configuration 12) In Configuration 11, at least the control based on the streaming playback instruction is reduced when the control based on the specified operation and the control based on the streaming playback instruction occur simultaneously.

(Configuration 13) An exemplary embodiment provides one or more non-transitory computer-readable storage media having stored therein instructions that cause one or more processors of a vibration control apparatus comprising a vibration device configured to reproduce audio frequencies to perform operations comprising: sequentially acquiring PCM data of a specified sampling rate that is the same as a control cycle of the vibration device or a sampling rate of an amplifier that controls the vibration device; and controlling the vibration device using the sequentially acquired PCM data.

(Configuration 14) In Configuration 13, the operations further comprise acquiring a vibration instruction specifying an amplitude and a frequency, generating control data at a specified cycle based on the specified amplitude and the frequency according to the vibration instruction, and performing control of the vibration device using the control data.

(Configuration 15) In Configuration 14, the vibration instruction is configured to specify the amplitude and the frequency at a first period; the control data is generated to have a second period shorter than the first period; and the specified sampling rate of the PCM data is the same as the second period.

(Configuration 16) In Configuration 14, the operations further comprise exclusively controlling the control based on a streaming playback instruction and the control based on the vibration instruction.

(Configuration 17) An exemplary embodiment provides a computer-implemented method for controlling a vibration control apparatus comprising a vibration device configured to reproduce audio frequencies, the method comprising: sequentially acquiring PCM data of a specified sampling rate that is the same as a control cycle of the vibration device or a sampling rate of an amplifier that controls the vibration device; and controlling the vibration device using the sequentially acquired PCM data.

(Configuration 18) In Configuration 17, the method further comprises acquiring a vibration instruction specifying an amplitude and a frequency, generating control data at a specified cycle based on the specified amplitude and the specified frequency according to the vibration instruction, and further controlling the vibration device using the control data.

(Configuration 19) In Configuration 18, the vibration instruction is configured to specify the amplitude and the frequency at a first period; the control data is generated to have a second period shorter than the first period; and the specified sampling rate of the PCM data is the same as the second period.

(Configuration 20) In Configuration 18, the method further comprises exclusively controlling the control based on a streaming playback instruction and the control based on the vibration instruction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting drawing illustrating a schematic diagram illustrating an example of the vibration control system 10 according to the present embodiment.
FIG. 2 shows an exemplary illustrative non-limiting drawing illustrating a diagram illustrating an example of data stored in a volatile memory.
FIG. 3 shows an exemplary illustrative non-limiting drawing illustrating a diagram for explaining a flow of vibration generation.
FIG. 4 shows an exemplary illustrative non-limiting drawing illustrating a flowchart showing a processing procedure for making a preset registration request in a game program.
FIG. 5 shows an exemplary illustrative non-limiting drawing illustrating a flowchart showing a processing procedure for issuing a preset registration command in a system program.
FIG. 6 shows an exemplary illustrative non-limiting drawing illustrating a flowchart showing a processing procedure for preset registration in an MCU program.
FIG. 7 shows an exemplary illustrative non-limiting drawing illustrating a flowchart showing a processing procedure for an API request corresponding to an event in a game program.
FIG. 8 shows an exemplary illustrative non-limiting drawing illustrating a flowchart showing a processing procedure for issuing a preset playback command in a system program.
FIG. 9 shows an exemplary illustrative non-limiting drawing illustrating a flowchart showing a processing procedure for preset playback in an MCU program.
FIG. 10 shows an exemplary illustrative non-limiting drawing illustrating a flowchart showing a processing procedure for issuing a streaming playback command in a system program.
FIG. 11 shows an exemplary illustrative non-limiting drawing illustrating a flowchart showing a processing procedure for streaming playback in an MCU program.
FIG. 12 shows an exemplary illustrative non-limiting drawing illustrating a diagram for explaining vibration instruction data based on a sound file.
FIG. 13 shows an exemplary illustrative non-limiting drawing illustrating a table showing a relationship between frequencies of a musical scale in 12-tone equal temperament and post-encoded frequencies.
FIG. 14 shows an exemplary illustrative non-limiting drawing illustrating a diagram for explaining vibration instruction data based on a vibration file.
FIG. 15 shows an exemplary illustrative non-limiting drawing illustrating a flowchart showing an encoding procedure for vibration instruction data executed by a game apparatus.
FIG. 16 shows an exemplary illustrative non-limiting drawing illustrating a flowchart showing a decoding procedure for encoded vibration instruction data executed by a game controller.
FIG. 17 shows an exemplary illustrative non-limiting drawing illustrating a flowchart showing a processing procedure for control data generation executed by a game controller.
FIG. 18 shows an exemplary illustrative non-limiting drawing illustrating a flowchart showing a processing procedure for start processing in step S1018.
FIG. 19 shows an exemplary illustrative non-limiting drawing illustrating a flowchart showing a processing procedure for autonomous playback in an MCU program.

The same reference numerals are assigned to the same or corresponding parts in the drawings, and the description thereof is not repeated.

### DETAILED DESCRIPTION OF NON-LIMITING EXAMPLE EMBODIMENTS

The present embodiment will be described in detail with reference to the drawings. Note that the same reference signs are assigned to the same or corresponding parts in the drawings, and the description thereof will not be repeated.

### [EMBODIMENT 1]

### [A. OVERVIEW]

A configuration example of a vibration control system 10 that controls a vibration motor 206 in the present embodiment will be described.

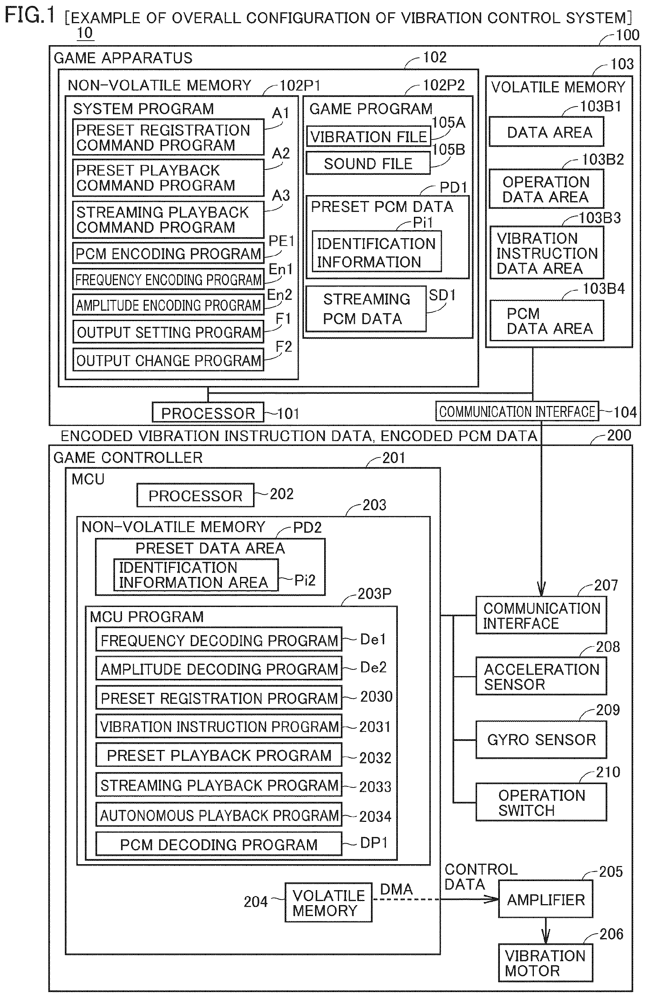

FIG. 1 is a schematic diagram illustrating an example of the vibration control system 10 according to the present embodiment. The vibration control system 10 according to the present embodiment is applied to a game system. The vibration control system 10 comprises a game apparatus 100 and a game controller 200. The game apparatus 100 is a main unit for providing a game to a user. The game controller 200 is an apparatus that a user playing a game grips and that receives an input.

The game apparatus 100 advances a game by causing a display device such as a TV monitor, an LCD, an organic EL (Electro Luminescence), or a Head Mounted Display (HMD) to display a video or an image according to a program. The user operates the game controller 200 according to the video or image displayed on the display device. The game apparatus 100 receives an input from the user to the game controller 200 and advances the game according to the input.

The game controller 200 of the present embodiment has a vibration motor 206 that vibrates according to the progress of the game. The vibration motor 206 vibrates by being controlled based on at least one of vibration instruction data and PCM (Pulse Code Modulation) data by an MCU 201, for example. The vibration instruction data is data that specifies a frequency and an amplitude of the vibration. The PCM data is data that represents a wave by quantizing the magnitude of the amplitude at a constant sampling rate, and can represent an audio wave. The sampling rate of the PCM data may be a period of 0.125 ms, for example. Hereinafter, the data every 0.125 ms in the PCM data may be referred to as one unit of PCM data.

Note that the vibration control system 10 of the present example is capable of control based on both vibration instruction data and PCM data. For an application developer, there are cases where it is preferable to specify the amplitude and the frequency, and cases where it is preferable to use the PCM data, and the application developer can select which method to adopt. As will be described later, the vibration instruction data is converted into control data by the MCU 201, and this control data is PCM format data in the present example. Therefore, when using the PCM data as data for vibrating, it can be used as the control data without changing the format.

In the present embodiment, the vibration motor 206 is capable of vibrating at an audible band frequency in addition to a tactile frequency band, and when a vibration is instructed at a frequency in the tactile frequency band, the vibration motor 206 exhibits a function of applying a vibration to the user's sense of touch, and when a vibration is instructed at a frequency in the audible band, the vibration motor 206 exhibits a function as a speaker that causes the user's sense of hearing to recognize sound. The tactile frequency band means, for example, a frequency band where a person can perceive a vibration. Hereinafter, the frequency of the audible band may be referred to as an "audio frequency".

The vibration motor 206 is a type of vibration device, and is a voice coil motor in the present example. More specifically, the vibration motor 206 is a voice coil motor that performs reciprocating motion. The vibration motor 206 of the present example is a device that can vibrate at a high speed and a high output in the audible band frequency so that the user can hear sound, based on the PCM data described above. That is, the vibration motor 206 can function as a speaker based on the PCM data. The vibration motor 206 can vibrate in both the tactile frequency and the audible band frequency. That is, the vibration instruction data can specify both the tactile frequency and the audible band frequency, and the vibration motor 206 functions as a vibrator that gives a vibration to the user's sense of touch and also functions as a speaker. Note that a device using a piezo element may be used as the vibration device.

In the present embodiment, the game controller 200 uses four different methods to cause the vibration motor 206 to function as a speaker. The first method is a method in which PCM data is transmitted in advance from the game apparatus 100 to the game controller 200 together with identification information (an ID, etc.) to be preset in a memory of the game controller 200, and then the game apparatus 100 specifies the identification information of the preset PCM data to cause playback (hereinafter, referred to as "preset playback"). The second method is a method of sequentially transmitting PCM data from the game apparatus 100 to the game controller 200 (hereinafter, referred to as "streaming playback"). The third method is a method in which the amplitude and the frequency (a frequency in the audible area) are specified and played back based on the vibration instruction data from the game apparatus 100 (hereinafter, referred to as "amplitude frequency specified playback"). The fourth method is a method in which playback is performed by processing by a processor within the game controller based on an operation on the game controller 200 (hereinafter, referred to as "autonomous playback" because it is performed regardless of the processing of the game apparatus 100). The autonomous playback data may be PCM data, or may be vibration instruction data (data instructing an amplitude and a frequency, in which a frequency in the audible area is specified).

### [B. CONFIGURATION OF GAME APPARATUS]

The game apparatus 100 has a processor 101, a non-volatile memory 102, a volatile memory 103, and a communication interface (I/F) 104. The processor 101 is a processing entity for executing processing provided by the game apparatus 100. The processor 101 reads a system program 102P1 and a game program 102P2 stored in the non-volatile memory 102, expands the programs in the volatile memory 103, and executes them.

The processor 101 is a processing circuit, such as a CPU (Central Processing Unit). Note that, in the present specification, the term "processor" includes a processing circuit such as a CPU, an MPU (Micro Processing Unit), or a GPU (Graphics Processing Unit), which executes processing according to an instruction code described in a program, and also includes hardwired circuits such as an ASIC or an FPGA. The hardwired circuits such as an ASIC or an FPGA have circuits corresponding to the processing to be executed formed in advance. Furthermore, the "processor" in the present specification may include a circuit in which a plurality of functions are integrated, such as an SoC (System on Chip). The processor 101 may be an SoC in which the functions of a CPU and a GPU are integrated, for example. Also, each processing in the present example may be executed by a single processor, or may be executed by a plurality of processors sharing and cooperating with each other.

The non-volatile memory 102 is a non-volatile storage device accessible by the processor 101, and an SSD (Solid State Drive), a flash memory, or a hard disk, etc. may be used, for example. Note that the non-volatile memory 102 may be a storage medium attachable to and detachable from the game apparatus 100, such as an optical disc or a cartridge, for example.

The system program 102P1 is a program that performs processing of a system part of the game apparatus 100, realizes basic functions of the game apparatus 100, and provides various functions to application programs. The system program 102P1 also includes a program for transmitting various data stored in the volatile memory 103 to the game controller 200. The game program 102P2, which is a type of application program, is a program for executing a game, and is stored in a storage medium detachably attached to the game apparatus 100, for example, or is downloaded to the non-volatile memory 102 via the Internet. The system program 102P1 may include a menu program or a certain type of application program, and those programs may cause the vibration motor to output a vibration or a sound by utilizing vibration instruction data or PCM data.

### (b1. Game Program 102P2)

The game program 102P2 in the present embodiment includes a vibration file 105A, a sound file 105B, preset PCM data PD1, and streaming PCM data SD1. First, the vibration file 105A and the sound file 105B included in the game program 102P2 will be described.

### (b1-1. Vibration File 105A and Sound File 105B)

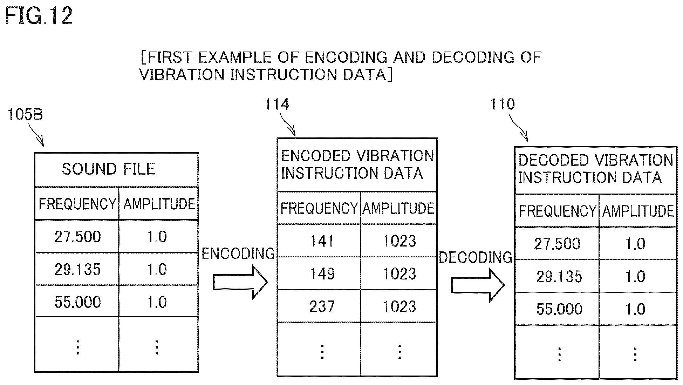

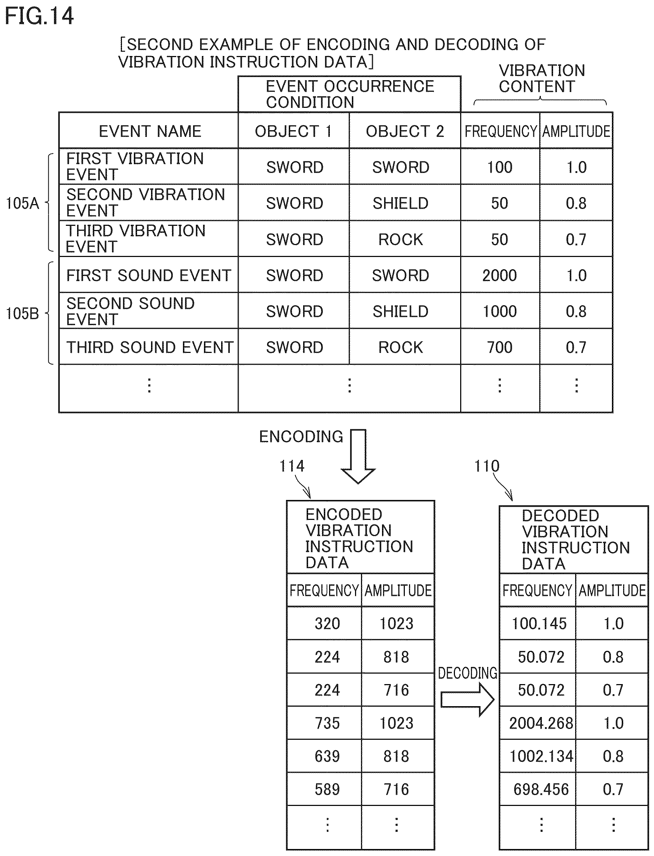

The vibration file 105A and the sound file 105B include vibration instruction data, that is, include data that instructs a frequency and data that instructs an amplitude. A specific example of the vibration file 105A is shown in FIG. 14, which will be described later, and a specific example of the sound file 105B is shown in FIG. 12, which will be described later. As shown in FIG. 12 and FIG. 14, each of the vibration file 105A and the sound file 105B is a file that continuously specifies a frequency and an amplitude for each event that occurs in the game program 102P2. That is, each of the vibration file 105A and the sound file 105B is not a single data indicating a certain vibration, but is a set of data instructing a plurality of continuous vibrations.

The vibration file 105A includes data for each vibration event for causing the vibration motor 206 to function as a vibrator that applies a vibration to the user's sense of touch, and includes parameters that instruct a frequency (a frequency in the tactile area is specified) and an amplitude.

The sound file 105B includes data for each sound event for causing the vibration motor 206 to function as a speaker that causes the user's sense of hearing to recognize sound, and includes parameters that indicate a frequency (a frequency in the audible area is specified) and an amplitude. In the present embodiment, the format of the vibration instruction data included in the vibration file 105A and the sound file 105B is the same, and the instructed frequency bands are different. Note that the format of the vibration instruction data included in the vibration file 105A and the sound file 105B may be different.

The frequency band specified by the vibration file 105A is, for example, 40 Hz to 400 Hz. When a low frequency is specified, a heavy vibration is output, and when a high frequency is specified, a sharp vibration is output. The frequency band specified by the sound file 105B is, for example, 400 Hz to 3500 Hz. When a low frequency is specified, a low sound is output, and when a high frequency is specified, a high sound is output. Note that 40 Hz to 400 Hz is an example of a "frequency of an effective band of vibration". Four hundred hertz to Thirty-five hundred hertz is an example of an "audible area frequency" in the present disclosure. Frequencies other than 400 Hz to 3500 Hz are an example of a "non-audible area frequency" in the present disclosure. The boundary between the audible area frequency and the tactile area frequency may be changed as appropriate.

For example, the vibration event and the sound event may be that objects collide with each other, an explosion occurs, a gun is fired, a car or the like is traveling on a road surface, etc. in a virtual game space. A vibration and/or a sound corresponding to these events are output by the vibration of the vibration motor 206. The sound event may also include that a character in the virtual space has uttered a voice, objects have collided, a phenomenon in the game, a UI (User Interface) button has been selected by the user, a timing to sound an SE, etc. Furthermore, the sound generated according to the sound event may include voice data, SE, BGM, musical instrument sound, etc. In the sound file 105B, the frequency may be specified according to a specified musical scale. The specified musical scale is, for example, 12-tone equal temperament, etc.

The frequency included in the vibration instruction data can be changed according to, for example, the magnitude of a collision in the virtual game space, the weight set for the colliding object, the material, etc. That is, the effect of the effect can be changed by changing the frequency. The magnitude of the collision is determined based on, for example, the speed of the collision, the weight of the colliding object, etc. The frequency may be limited by various conditions of the system.

The vibration file 105A and the sound file 105B include two parameters: a frequency and an amplitude for vibrating the vibration motor 206. The game apparatus 100 generates the vibration instruction data using the two parameters of the frequency and the amplitude included in the vibration file 105A and the sound file 105B. Note that, in the present specification, "generation" includes both reading data from the non-volatile memory or the volatile memory (which is used as is for subsequent processing) and generating other data based on the read data.

The vibration instruction data is data that specifies an amplitude and a frequency at a specified period. This specified period is 5 ms as an example. That is, the vibration file 105A and the sound file 105B include the vibration instruction data for each specified period. Note that, as will be described later, the control of the vibration motor 206 performed based on the vibration instruction data is performed at a period shorter than the period of the vibration instruction data. By sequentially and continuously transmitting each vibration instruction data included in the vibration file 105A and the sound file 105B to the game controller 200, the game controller 200 vibrates continuously for a period of 5 ms or more. Note that the vibration period of the vibration motor 206 may be specified to be different for each generated vibration instruction data. The game controller 200 receives the vibration instruction data from the game apparatus 100, and vibrates the vibration motor 206 based on the frequency and the amplitude specified in the received vibration instruction data.

The maximum value of the input voltage is specified in advance for each frequency of the vibration motor 206. In the present embodiment, the instruction amplitude of the vibration specified by the application program is normalized with respect to the maximum voltage for each instructed frequency. Specifically, the amplitude included in the vibration instruction data is represented by a numerical value between 0 and 1.0. When the amplitude is "1.0", control data is generated based on the maximum voltage at the instructed frequency included in the vibration instruction data. When the amplitude is "0.5", control data is generated based on 50% of the maximum voltage at the instructed frequency included in the vibration instruction data. The data showing the maximum voltage for each frequency is stored in the non-volatile memory of the game apparatus and/or the non-volatile memory of the game controller, and is referred to when generating the control data. Note that the maximum value of the output voltage of the amplifier that controls the vibration motor 206 may be used as a reference.

Note that the aspect of the amplitude instruction in the vibration instruction data is not limited to this example, and may not be normalized with respect to the maximum input voltage for each frequency.

### (b1-2. Preset PCM Data PD1 and Streaming PCM Data SD1)

Next, the preset PCM data PD1 and the streaming PCM data SD1 will be described. Each of the preset PCM data PD1 and the streaming PCM data SD1 is a set of a plurality of PCM data that are sampled at a specified period.

The preset PCM data PD1 is transmitted in advance to the game controller 200 before the timing when a request for preset playback is made, and is stored in the memory within the game controller 200. On the other hand, the streaming PCM data SD1 is sequentially transmitted to the game controller 200 in real time at the timing when a request for streaming playback is made.

As shown in FIG. 1, the preset PCM data PD1 includes identification information Pi1. The identification information Pi1 is information for identifying each of the plurality of preset PCM data PD1. For example, a mutually different ID is assigned to each of the preset PCM data PD1 as the identification information Pi1. Thereby, in the vibration control system 10, a desired preset PCM data can be specified based on the identification information Pi1.

Note that the preset PCM data and the streaming PCM data may be included in the game program 102P2, or may be included in the system program (a menu program, etc.). Furthermore, they may be stored in the non-volatile memory in advance, or may be downloaded from a server, etc. Such data is used by the game program 102P2, the system program 102P1, etc.

For example, the game program 102P2 can make a request to the game controller 200 to generate a vibration by using all or selectively using the vibration file 105A, the sound file 105B, the preset PCM data PD1, and the streaming PCM data SD1. The game program 102P2 makes a request to the system program 102P1 to vibrate the vibration motor 206 via an API (Application Programming Interface). In the vibration control system 10, a specified command system is prepared as an API for an application such as the game program 102P2 to request the execution of a specified processing from the system program 102P1. Note that, in the present specification, "a processor or the like executing a certain program executes a certain processing" may be expressed as "a certain program executes a certain processing".

Specifically, the game program 102P2 makes a request for a vibration to the system program while passing the vibration instruction data read from the vibration file 105A and the sound file 105B as an argument using a vibration instruction API, based on detecting the occurrence of a vibration event or a sound event according to the game progress. Alternatively, the game program 102P2 makes a request for preset playback to the system program while passing the identification information of the preset PCM data PD1 as an argument using a preset playback API. Furthermore, the game program 102P2 makes a request for a preset to the system program while passing the preset PCM data as an argument using a preset registration API. Alternatively, the game program 102P2 makes a request for streaming playback to the system program while sequentially passing the streaming PCM data SD1 as an argument using a streaming playback API. Note that, since the vibration instruction data included in the vibration file and the sound file only differ in the frequency band, a request for a vibration instruction can be made with a common API. Hereinafter, a request using an API may be simply referred to as an "API request". Next, the system program 102P1 that receives the API request from the game program 102P2 will be described. Note that, in a certain situation, an API may not be prepared in advance as a specification for making these requests.

### (b2. System Program 102P1)

The system program 102P1 transmits various commands to the game controller 200 in response to the request via the API from the game program 102P2 described above. The system program 102P1 includes a preset registration command program A1, a preset playback command program A2, a streaming playback command program A3, a PCM encoding program PE1, a frequency encoding program En1, an amplitude encoding program En2, an output setting program F1, and an output change program F2.

The system program 102P1 transmits a preset playback command to the game controller 200 in response to the game program 102P2 executing a request using the preset playback API. The preset playback command includes the identification information of the PCM data to be played back, which was passed by the game program 102P2 using the preset playback API. Furthermore, the system program 102P1 transmits a preset registration command to the game controller 200 in response to the game program 102P2 executing a request using the preset registration API. The preset registration command includes the PCM data and its identification information, which were passed by the game program 102P2 using the preset playback API.

The system program 102P1 transmits a streaming playback command to the game controller 200 in response to the game program 102P2 executing a request using the streaming playback API. The streaming playback command includes the PCM data (for a specified number of samplings) which was passed by the game program 102P2 using the streaming playback API.

The system program 102P1 transmits a vibration instruction command to the game controller 200 in response to the game program 102P2 executing a request using the vibration instruction API. The vibration instruction command includes the vibration instruction data which was passed by the game program 102P2 using the vibration instruction API.

When there is a request using the vibration instruction API from the game program 102P2, the system program 102P1 executes processing to encode the vibration instruction data acquired from the game program 102P1, and processing to transmit the encoded vibration instruction data to the game controller 200. In the processing to encode the vibration instruction data, the system program 102P1 executes the frequency encoding program En1 and the amplitude encoding program En2. Note that the processing to encode the vibration instruction data may be executed by the game program 102P2 instead of the system program 102P1. Furthermore, when there is a request using the streaming playback API from the game program 102P2, the system program 102P1 (the PCM encoding program PE1) executes processing to encode the PCM data acquired from the game program 102P2 using a specified audio codec. The encoded PCM data is transmitted to the game controller 200.

In the present embodiment, the vibration instruction data is encoded to be transmittable between the game apparatus 100 and the game controller 200 with a capacity of 20 bits per one piece of vibration instruction data. More specifically, the game apparatus 100 encodes the frequency included in the vibration instruction data with 10 bits and encodes the amplitude included in the vibration instruction data with 10 bits. Hereinafter, the encoded frequency is referred to as an "encoded frequency", the encoded amplitude is referred to as an "encoded amplitude", and the 20-bit data including the encoded frequency and the encoded amplitude is referred to as "encoded vibration instruction data". The game apparatus 100 transmits the encoded vibration instruction data to the game controller 200.

This reduces the amount of communication between the game apparatus 100 and the game controller 200 compared to when unencoded vibration instruction data is transmitted from the game apparatus 100 to the game controller 200. Note that the number of bits used for the encoded frequency and the number of bits used for the encoded amplitude may be arbitrary numbers. Hereinafter, the frequency encoding program En1 and the amplitude encoding program En2 may be collectively referred to simply as an "encoding program En". The encoding of the vibration instruction data will be described in detail later.

The output setting program F1 is a program for causing the user to set the magnitude or availability of the output from the vibration device, and is a program included in the system program of the game apparatus, for example, and causes the user to select it using a user interface such as a system menu, etc. When setting the availability of the output (hereinafter, this method may be referred to as an on/off setting method), the user may be caused to select from two options, such as "on" or "off", for example. Hereinafter, this setting value may be referred to as an "on/off setting value (audio area)". Furthermore, when setting the magnitude of the output (hereinafter, this method may be referred to as a volume setting method), the user may be caused to select from "high", "medium", "low", "off", or the like, or may be caused to select from 10 levels, etc. (there may be more levels, or it may be analog). When selecting the magnitude of the output in this way, the setting value becomes a volume value. Hereinafter, this volume value may be referred to as a "volume value (audio area)".

Instead of the system menu, the setting may be performed automatically according to the user's selection via a user interface provided by an application program (a game program, etc.) being executed, or by a setting suitable for the application.

A value indicating the setting selected in this way is stored as the setting value. In the present example, the output setting program F1 causes the user to separately set the magnitude or availability of the output in the tactile area and the magnitude or availability of the output in the audio frequency band. In this case, there are separate setting values for the tactile area and the audio frequency band. That is, in the case of the on/off setting method, the user can separately perform the setting of on/off for the tactile area and the setting of on/off for the audio frequency band. Furthermore, in the case of the volume setting method, the user can separately perform the volume adjustment for the tactile area and the volume adjustment for the audio frequency band.

Furthermore, the output setting program F1 may cause the user to separately set the magnitude or availability of the output in the whole area (the area including both the tactile area and the audio area) and the magnitude or availability of the output in the audio frequency band. That is, in the case of the on/off setting method, the user can set the on/off for the audio frequency band only, in addition to the setting of on/off for the whole area. Furthermore, in the case of the volume setting method, the user can perform the volume adjustment for the audio frequency band only, in addition to the volume adjustment for the whole area. In this case, there is a setting value for the audio frequency band in addition to the setting value for the whole area. Note that the user may be caused to set each of the three setting values: the output value for the whole area, the setting value for the tactile area, and the setting value for the audio area.

Whether to use the on/off setting method or the volume setting method is arbitrary, and one of the setting for the contact area and the setting for the audio area may be the on/off setting method and the other may be the volume setting method, or vice versa. The same applies to the setting for the whole area.

The output change program F2 is a program that changes the availability or magnitude of the output from the vibration motor 206 based on the setting value set in this way. Note that, in the present disclosure, "output change" includes both switching the availability of the output and adjusting the magnitude of the output.

### (b3. Volatile Memory 103)

Next, the volatile memory 103 within the game apparatus 100 will be described. The volatile memory 103 is a volatile storage device accessible by the processor 101, and a DRAM (Dynamic Random Access Memory) or an SRAM (Static Random Access Memory), etc. may be used, for example. The volatile memory 103 has a data area 103B1, an operation data area 103B2, and a vibration instruction data area 103B3. The data area 103B1 is an area for temporarily storing data generated when the processor 101 executes the game program 102P2, for example.

The operation data area 103B2 is an area for temporarily storing operation data received from the game controller 200. The operation data is data indicating an input by the user to the game controller 200, and is a detection value of an acceleration sensor 208, a gyro sensor 209, and an operation switch 210, etc.

The vibration instruction data area 103B3 is an area for temporarily storing the vibration instruction data after being encoded. The PCM data area 103B4 is an area for temporarily storing PCM data such as the preset PCM data PD1 and the streaming PCM data SD1 included in the game program 102P2, etc. Note that, in the present specification, the term "memory" includes at least both the non-volatile memory 102 and the volatile memory 103.

The game apparatus 100 transmits the data within the volatile memory 103 to the game controller 200 via the communication interface 104. The communication interface 104 performs wireless communication with the game controller 200 using an antenna (not shown), for example. The communication method for the wireless communication between the game apparatus 100 and the game controller 200 is arbitrary, but in the present embodiment, the game apparatus 100 performs communication according to the Bluetooth^{®} standard with the game controller 200, but may follow other standards such as IEEE 802.11, or may use a proprietary communication protocol. The communication between the game apparatus 100 and the game controller 200 may be wired communication, and in this case, the communication interface 104 may be a terminal of a USB (Universal Serial Bus) standard, etc., for example.

### [C. CONFIGURATION OF GAME CONTROLLER 200]

The game controller 200 will be described. The game controller 200 comprises an MCU (Micro Controller Unit) 201, an amplifier 205, a vibration motor 206, a communication interface (I/F) 207, an acceleration sensor 208, a gyro sensor 209, an operation switch 210, etc. Furthermore, the game controller 200 has an optical sensor, etc. and has a mouse function.

The game controller 200 may be a typical game controller of a type that is gripped by both hands or one hand of the user and receives an input from the user by the operation switch 210 being operated by the user's fingers, or may be configured as a mouse that can be used for a general-purpose PC or the like, comprising the vibration motor 206, for example. Alternatively, the game controller 200 may have both the function as the typical game controller described above and the function as a mouse that can be used for a PC or the like. Furthermore, the game controller 200 may be of other formats, for example, a format that is laid on the floor and receives an input by the user's sole contacting a sensor, or a general-purpose keyboard, etc.

The MCU 201 has a processor 202, a non-volatile memory 203, and a volatile memory 204. The processor 202, the non-volatile memory 203, the volatile memory 204, and the communication interface 207 in the game controller 200 respectively have the same hardware configuration as the processor 101, the non-volatile memory 102, the volatile memory 103, and the communication interface 104 in the game apparatus 100 described above. Therefore, the description of these hardware configurations will not be repeated. However, for cost reduction of the game controller 200, the processor 202 may be a processor with lower processing capability than the processor 101.

The non-volatile memory 203 stores preset PCM data and an MCU program 203P. Furthermore, the non-volatile memory 203 may store the autonomous playback PCM data described above. The preset data area PD2 may store PCM data transmitted in advance from the game program 102P2, etc., may store specified PCM data at the time of factory shipment of the game controller 200, or PCM data downloaded by the game apparatus 100 executing a system program, etc. from a server, etc. may be transmitted to the game controller 200 and stored. The autonomous playback PCM data may also be stored in the preset data area PD2 as PCM data at the time of factory shipment of the game controller 200. The download from a specified server may be firmware update, etc., for example. The preset data area PD2 includes an identification information area Pi2 that stores the identification information Pi1.

The MCU program 203P includes a frequency decoding program De1, an amplitude decoding program De2, a preset registration program 2030, a vibration instruction program 2031, a preset playback program 2032, a streaming playback program 2033, an autonomous playback program 2034, and a PCM decoding program DP1. Furthermore, although not shown in FIG. 1, the MCU program 203P includes a program for transmitting detection values of the operation switch 210, the acceleration sensor 208, and the gyro sensor 209 to the game apparatus 100 via the communication interface 207, and a program for executing various processing such as receiving encoded vibration instruction data from the game apparatus 100, etc.

The frequency decoding program De1 is a program for decoding an encoded frequency. The amplitude decoding program De2 is a program for decoding an encoded amplitude. Hereinafter, the frequency decoding program De1 and the amplitude decoding program De2 may be collectively referred to simply as a "decoding program De". The PCM decoding program DP1 is a program for decoding PCM data sent together with a streaming playback command or a preset registration command from the game apparatus 100. The processor 202 generates decoded vibration instruction data by decoding the encoded vibration instruction data using the frequency decoding program De1, the amplitude decoding program De2, and the PCM decoding program DP1.

The vibration instruction program 2031 is a program for generating control data to be transmitted to the amplifier 205 based on the decoded vibration instruction data. The control data is typically data indicating a voltage value of a waveform for driving the vibration motor 206.

The preset playback program 2032 is a program for generating control data based on the preset PCM data corresponding to the identification information Pi1 transmitted together with the preset playback command, in response to the preset playback command received from the game apparatus 100.

The streaming playback program 2033 is a program for generating control data based on the streaming PCM data SD1 transmitted together with the streaming playback command, in response to the streaming playback command received from the game apparatus 100.

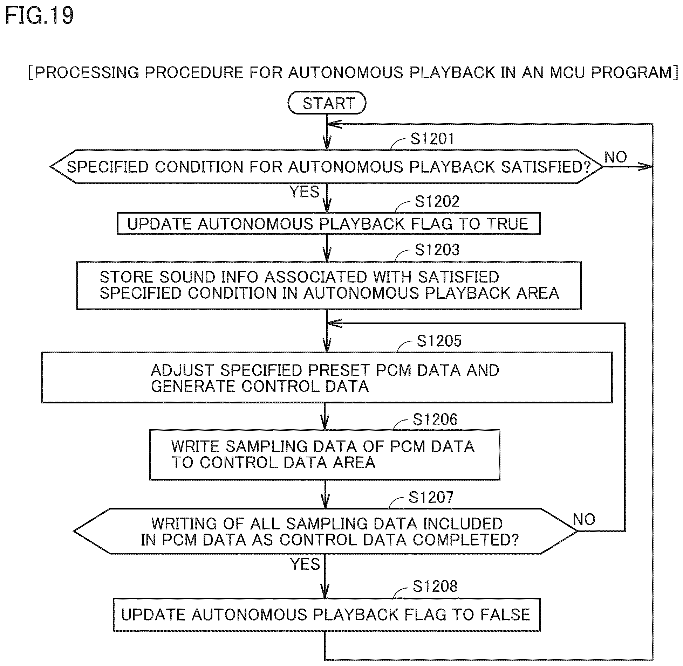

The autonomous playback program 2034 is a program for generating control data based on the corresponding PCM data in response to a specified condition described later in FIG. 19 being satisfied. The PCM decoding program DP1 is a program for decoding the PCM data encoded by the PCM encoding program PE1.

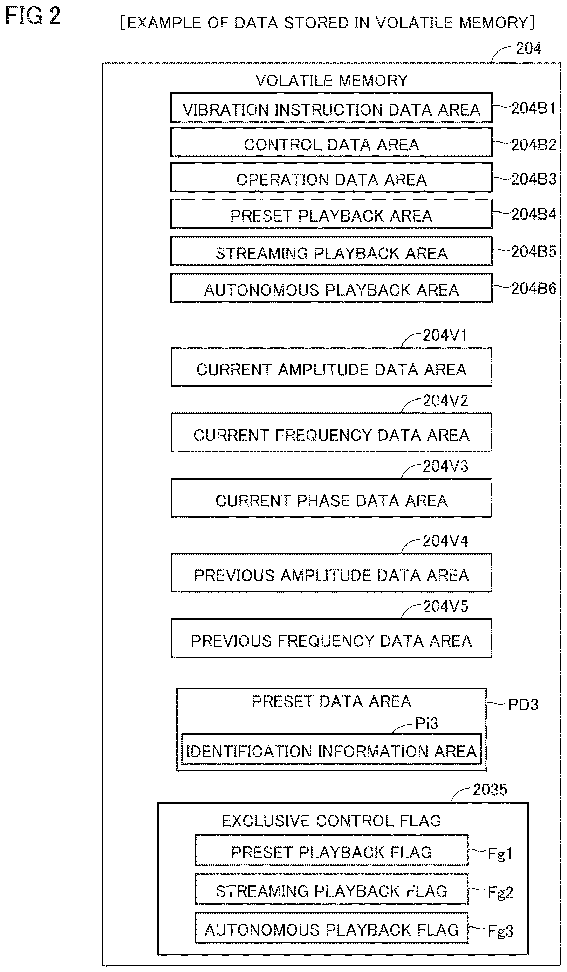

Next, the data stored in the volatile memory 204 of the game controller 200 will be described using FIG. 2. FIG. 2 is a diagram illustrating an example of data stored in the volatile memory 204. The volatile memory 204 has a vibration instruction data area 204B1, a control data area 204B2, an operation data area 204B3, a preset playback area 204B4, a streaming playback area 204B5, an autonomous playback area 204B6, a current amplitude data area 204V1, a current frequency data area 204V2, a current phase data area 204V3, a previous amplitude data area 204V4, a previous frequency data area 204V5, a preset data area PD3, and an exclusive control flag 2035.

The vibration instruction data area 204B1 is an area for temporarily storing the encoded vibration instruction data and the decoded vibration instruction data received from the game apparatus 100. The control data area 204B2 is an area for temporarily storing the control data generated by the processor 202. The operation data area 204B3 is an area for temporarily storing the operation data. The preset playback area 204B4 is an area for temporarily storing the preset PCM data to be played back, which is identified by the preset playback program 2032. The streaming playback area 204B5 is an area for temporarily storing the streaming PCM data SD1 received together with the streaming playback command. Note that what is stored in the streaming playback area 204B5 at a certain timing is data for several samplings transmitted from the game apparatus 100. The autonomous playback area 204B6 is an area for temporarily storing the PCM data for autonomous playback.

The current amplitude data area 204V1, the current frequency data area 204V2, the current phase data area 204V3, the previous amplitude data area 204V4, and the previous frequency data area 204V5 are temporary areas used for generating the control data based on the vibration instruction data. These areas will be described in detail later.

The preset data area PD3 is a volatile area for storing the preset PCM data, similar to the preset data area PD2. That is, the preset PCM data may be stored non-volatile manner or may be stored in a volatile manner. The preset PCM data temporarily used in a certain game program 102P2 may be stored in the volatile area. The preset data area PD3 may store the PCM data transmitted from the game program 102P2.

The exclusive control flag 2035 is a flag for determining which of the four playback methods described above (preset playback, streaming playback, amplitude frequency specified playback, autonomous playback) should be used to vibrate the vibration motor 206 when a plurality of them occur simultaneously. The exclusive control flag 2035 includes a preset playback flag Fg1, a streaming playback flag Fg2, and an autonomous playback flag Fg3. The preset playback flag Fg1 is set to True when the vibration motor 206 is being vibrated by a preset playback command, and is set to False when it is not.

The streaming playback flag Fg2 is set to True when the vibration motor 206 is being vibrated by a streaming playback command, and is set to False when it is not. The autonomous playback flag Fg3 is set to True when the vibration motor 206 is being vibrated by autonomous playback, and is set to False when it is not.

Returning to FIG. 1, the control data stored in the control data area 204B2 in the volatile memory 204 is transferred to the amplifier 205 by DMA (Direct Memory Access), for example. In the present example, a plurality of (specifically, 40, for example) pieces of control data are simultaneously transferred to the amplifier 205. The amplifier 205 in the present embodiment is an amplifier that performs PWM (Pulse Width Modulation) control at a frequency of 8 kHz. The amplifier 205 determines a duty cycle every 0.125 ms based on the received control data, and supplies power to the vibration motor 206. Hereinafter, the period of 0.125 ms, in which the duty cycle is determined using one piece of control data, may be referred to as a "control cycle". The vibration control system 10 is configured such that the control cycle (0.125 ms) matches the sampling rate of each PCM data described above. That is, in the present example, the sampling rate of each PCM data described above is a period of 0.125 ms. Note that the PWM control frequency of the amplifier 205 may not be 8 kHz. For example, if the PWM control frequency of the amplifier 205 is 48 kHz, the sampling rate of the PCM data may be approximately 0.0208 ms. Note that the sampling rate of the amplifier 205 (the update frequency of the data input to the amplifier) is 0.125 ms.

As described above, the vibration motor 206 is typically a voice coil motor, but may be a motor using a piezo element, etc., and the method of the motor is not limited. Furthermore, the vibration motor 206 may be provided with an element that vibrates the surrounding air, such as a cone paper, etc., but the vibration motor 206 may have a structure in which the casing vibrates to emit sound. That is, the vibration motor 206 is configured to emit sound according to the design of the casing, etc. by vibrating. The vibration motor 206 can provide both a physical vibration and a sound to the user holding the game controller 200 in which the vibration motor 206 is stored.

The acceleration sensor 208 detects the magnitude of the linear acceleration along a specified three-axis direction. Note that the acceleration sensor 208 may detect the acceleration in one-axis direction or two-axis directions. The gyro sensor 209 detects the tilt, angular velocity, and angular acceleration, etc. of the game controller 200, and outputs the detection result to the operation data area 204B3.

The detection results of the acceleration sensor 208 and the gyro sensor 209 are output to the processor 101. The processor 101 in the game apparatus 100 can calculate information regarding the movement and/or posture of the game controller 200 based on the detection results of the acceleration sensor 208 and the gyro sensor 209.

When the game controller 200 includes a function as a general-purpose mouse, the operation switch 210 may include a left click receiving unit, a right click receiving unit, and a cursor operation unit, for example. Note that the operation switch 210 may include at least one button, key, and/or stick provided on the surface of the game controller 200 other than the left click receiving unit, the right click receiving unit, and the cursor operation unit. The at least one button, key, and/or stick may include a button associated with characters such as an A button or a B button, a cross key for inputting up, down, left, and right directions, a 3D stick for inputting a tilt direction and a tilt amount, etc. The operation switch 210 may also be a device that reads specified information, and may be an NFC (Near Field Communication) reader, for example. The success of reading by NFC may be included in the specified condition.

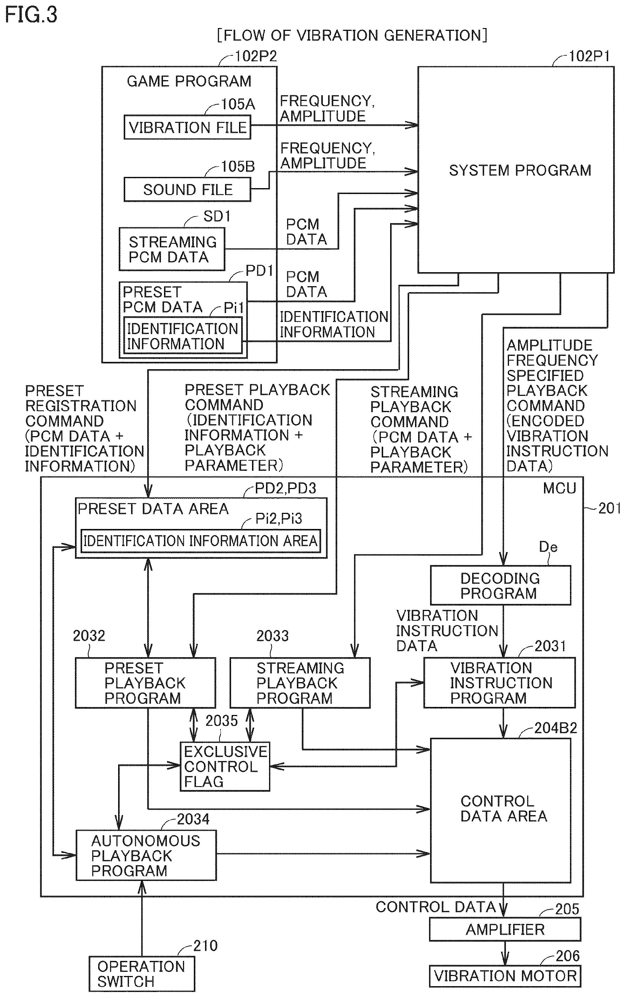

FIG. 3 is a diagram for explaining a flow of generating a tactile area vibration or an audible area vibration in the vibration motor 206. First, the flow of generating a tactile area vibration will be described. The game program 102P2 reads the corresponding vibration instruction data (including parameters indicating a frequency and an amplitude) from the vibration file 105A based on the occurrence of a vibration event, and passes it to the system program 102P1 via the vibration instruction API.

The system program 102P1 transmits a vibration instruction command to the game controller 200 based on the vibration instruction data acquired from the game program 102P2. More specifically, the system program 102P uses the encoding program En to encode the acquired vibration instruction data, and transmits the encoded vibration instruction data and the vibration instruction command including the encoded vibration instruction data to the game controller 200. The MCU 201 uses the decoding program De to decode the encoded vibration instruction data.

Thereafter, the MCU 201 executes the vibration instruction program 2031 on the decoded vibration instruction data. The MCU 201 acquires the value of the exclusive control flag 2035 and executes processing corresponding to the value of each flag included in the exclusive control flag 2035. When the vibration instruction program 2031 confirms the value of the exclusive control flag 2035 and determines to perform vibration control based on the vibration instruction data, the MCU 201 generates control data based on the decoded vibration instruction data and stores it in the control data area 204B2. The MCU 201 outputs the control data stored in the control data area 204B2 to the amplifier 205. Thereby, the vibration motor 206 vibrates based on the control data and functions as a vibrator that imparts a sense of touch. In this way, the vibration instruction data generated based on the vibration file 105A is encoded in the game apparatus 100, then decoded in the game controller 200, and processed to vibrate the vibration motor 206. Note that the encoding and decoding processing may not be performed.

Next, the output in the audible area by preset playback will be described using FIG. 3. The game program 102P2 passes the preset PCM data PD1 and its identification information to the system program 102P1 using the preset registration API at the preset registration timing. The preset registration timing may be, for example, at the time of loading when the execution of the game program 102P2 is started, at the start of game play, when a specified stage is entered, when a character in the virtual space moves to a specified map, etc.

The system program 102P1 transmits a preset registration command including the preset PCM data PD1 and the identification information passed from the game program 102P2 to the game controller 200, based on receiving the preset registration request from the game program 102P2 via the preset registration API. Although not shown, at this time, the system program 102P1 of the present embodiment uses the PCM encoding program PE1 to encode the PCM data, and transmits the encoded PCM data. Note that the system program 102P1 may transmit the PCM data without encoding it. The MCU 201 that has received the preset registration command uses the PCM decoding program DP1 to decode the encoded preset PCM data, and stores the decoded preset PCM data PD1 in at least one of the preset data area PD2 or the preset data area PD3 together with the identification information. Thereby, the game controller 200 can store the PCM data for outputting sound inside the game controller 200 in advance.

The game program 102P2 makes a request to the system program 102P1 using the preset playback API to play back the preset PCM data registered in advance in the game controller 200, based on the occurrence of a sound event that causes the preset PCM data to be played back during game execution, etc. When making the request, the game program 102P2 uses the preset playback API to pass the identification information Pi1 associated with the preset PCM data PD1 to be played back and a playback parameter indicating a parameter for playback to the system program 102P1. The playback parameter may include at least one parameter of a volume, a pitch, a playback speed, an equalizer, a panning, and an echo during the playback of the PCM data.

The system program 102P1 receives the request using the preset playback API from the game program 102P2, and transmits a preset playback command including the passed identification information and the playback parameter to the game apparatus 100. When the MCU 201 receives the preset playback command, the MCU 201 executes the preset playback program 2032. The preset playback program 2032 specifies the preset PCM data PD1 corresponding to the received identification information Pi1, and performs processing for playback using the received playback parameter. That is, the preset playback program 2032 stores the specified preset PCM data PD1 in the preset playback area 204B4.

At this time, the MCU 201 accesses the exclusive control flag 2035 and updates the preset playback flag Fg1 to True. Each sampling data of the specified preset PCM data PD1 is sequentially read out and stored in the control data area 204B2. At this time, for example, each sampling data of the specified preset PCM data PD1 is adjusted according to the value of the volume value data which is the playback parameter. For example, when the volume value is 1, the sampling data is used as the control data as is, and when the volume value is 0.5, a value obtained by multiplying the sampling data by 0.5 is stored as the control data. The MCU 201 outputs each sampling data of the PCM data stored in the control data area 204B2 to the amplifier 205 as the control data. Thereby, the vibration motor 206 vibrates based on the PCM data and functions as a speaker that outputs sound. In this way, the vibration control system 10 can cause the vibration motor 206 to output sound by only transmitting the identification information Pi1 from the system program 102P1 to the game controller 200, by transmitting the preset PCM data to the game controller 200 in advance.

Next, the output in the audible area by the streaming playback described above will be described. The game program 102P2 makes a request to the system program 102P1 using the streaming playback API to play back the streaming PCM data SD1, based on the occurrence of a sound event that causes the streaming PCM data SD1 to be played back during game execution, etc. The request includes one or more sampling data sequentially read out from the streaming PCM data SD1 to be played back, and the playback parameter described above (a volume value, etc.).

The system program 102P1 transmits a streaming playback command to the game controller 200 in response to the request via the streaming playback API from the game program 102P2. Although not shown, at this time, the system program 102P1 of the present embodiment uses the PCM encoding program PE1 to encode the streaming PCM data. Note that the system program 102P1 may proceed with the processing without encoding the streaming PCM data. The streaming playback command includes one or more sampling data and the playback parameter of the encoded streaming PCM data SD1 acquired from the game apparatus 100. The MCU 201, based on receiving the streaming playback command, uses the PCM decoding program DP1 to decode the encoded streaming PCM data, and further executes the streaming playback program 2033. The streaming playback program 2033 stores the received sampling data and the playback parameter of the streaming PCM data SD1 in the streaming playback area 204B5.

At this time, the MCU 201 accesses the exclusive control flag 2035 and updates the streaming playback flag Fg2 to True. The sampling data of the received PCM data is stored in the control data area 204B2. At this time, for example, each sampling data of the specified preset PCM data PD1 is adjusted according to the value of the volume value data which is the playback parameter, and is stored in the control data area 204B2. The MCU 201 outputs the control data stored in the control data area 204B2 to the amplifier 205. Thereby, the vibration motor 206 vibrates using the sampling data of the PCM data as the control data and functions as a speaker that outputs sound. In this way, the vibration control system 10 can cause the vibration motor 206 to output sound in real time by transmitting the streaming PCM data to the game controller 200 according to the occurrence of a sound event.

Next, the output in the audible area by the amplitude frequency specified playback described above will be described. The game program 102P2 reads the corresponding vibration instruction data (including parameters indicating a frequency and an amplitude) from the sound file 105B based on the occurrence of a sound event during game execution, etc., and passes it to the system program 102P1 using the vibration instruction API. The system program 102P1 transmits a vibration instruction command to the game controller 200 based on the vibration instruction data being passed using the vibration instruction API. When using the vibration instruction data, the processing does not change whether a frequency in the tactile area is specified (when using the vibration file 105A) or a frequency in the audible area is specified (when using the sound file 105B), so the description will not be repeated.

Next, the sound output by the autonomous playback described above will be described. The MCU 201 continues to execute the autonomous playback program 2034, for example, when power is supplied to the game controller 200. The MCU 201 determines whether a specified condition is satisfied during the execution of the autonomous playback program 2034. The specified condition may be, for example, that the operation switch 210 is operated, that the detection values of the acceleration sensor 208 and the gyro sensor 209 are within a specified range, that a specified mouse operation is performed, or a combination thereof.

When the specified condition is satisfied, the MCU 201 reads the autonomous playback data corresponding to the satisfied specified condition. The autonomous playback data is, for example, PCM data, and may be stored in at least one of the preset data area PD2 or the preset data area PD3. Alternatively, the autonomous playback data may be vibration instruction data (data specifying an amplitude and a frequency), and may be stored in at least one of the non-volatile memory 203 or the volatile memory 204. FIG. 3 shows a case where it is stored as PCM data in at least one of the preset data area PD2 or the preset data area PD3. The MCU 201 accesses the preset data area PD2 or the preset data area PD3, acquires the PCM data which is the autonomous playback data, stores it in the autonomous playback area 204B6, and sequentially reads out the sampling data to use as the control data. In this way, in autonomous playback, the vibration motor 206 outputs sound based on the operation on the game controller 200, regardless of the instruction from the game apparatus 100.

Hereinafter, the processing executed for each of the game program 102P2, the system program 102P1, and the MCU 201 will be described using flowcharts.

### [D. PRESET REGISTRATION PROCESSING]

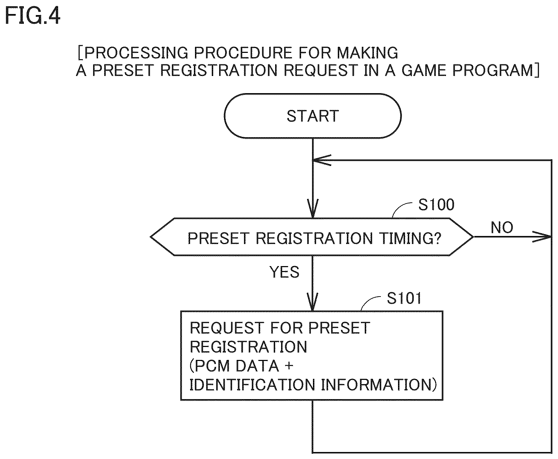

FIG. 4 is a flowchart showing a processing procedure for making a preset registration request in the game program 102P2. The processing of the flowchart shown in FIG. 4 is realized by the processor 101 executing the game program 102P2, and the execution is started based on the game program 102P2 being launched.

The processor 101 executing the game program 102P2 (hereinafter, sometimes referred to as "the game program 102P2") determines whether it is the preset registration timing (step S100). If it is not the preset registration timing (NO in step S100), the game program 102P2 repeats the processing of step S100. If it is the preset registration timing (YES in step S100), the game program 102P2 makes a request using the preset registration API to the system program 102P1 (step S101). That is, the game program 102P2 passes the preset PCM data PD1 to be registered and the identification information Pi1 corresponding to the preset PCM data PD1 to the system program 102P1 using the preset registration API (step S101), and the processing returns to step S100.

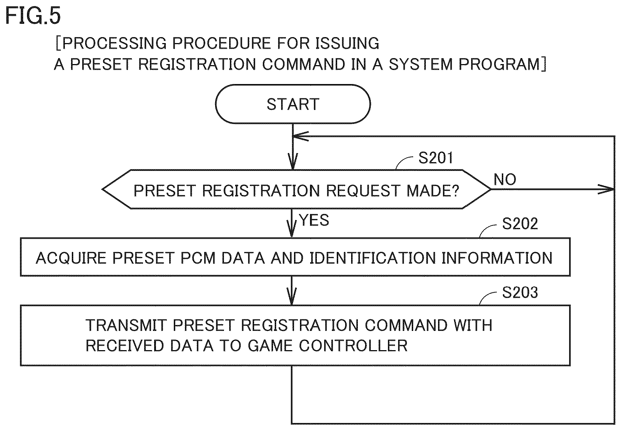

FIG. 5 is a flowchart showing a processing procedure for issuing a preset registration command in the system program 102P1. The processing of the flowchart shown in FIG. 5 is realized by the processor 101 executing the preset registration command program A1 included in the system program 102P1, and the execution is started based on power being supplied to the game apparatus 100.

The processor 101 executing the preset registration command program A1 of the system program 102P1 (hereinafter, sometimes referred to as "the system program 102P1") determines whether the game program 102P2 has made a preset registration request via the preset registration API (step S201). If the game program 102P2 has not made a preset registration request (NO in step S201), the system program 102P1 repeats the processing of step S201. If the game program 102P2 has made a preset registration request (YES in step S201), the system program 102P1 acquires the preset PCM data PD1 to be registered, the identification information Pi1 corresponding to the preset PCM data PD1, and the playback parameter (step S202). The system program 102P1 transmits a preset registration command including the acquired preset PCM data, identification information, and playback parameter to the game controller 200 (step S203), and the processing returns to step S201. As described above, the system program 102P1 may encode the PCM data in step S203 and transmit the encoded PCM data.

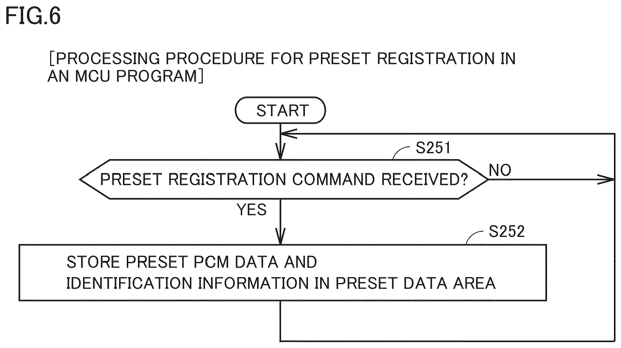

FIG. 6 is a flowchart showing a processing procedure for preset registration in the MCU program 203P. The processing of the flowchart shown in FIG. 6 is realized by the MCU 201 executing the preset registration program 2030. The MCU 201 executing the preset registration program 2030 of the MCU program 203P (hereinafter, sometimes referred to as "the MCU program 203P") determines whether a preset registration command has been received (step S251).

When the MCU 201 of the game controller 200 receives a preset registration command (YES in step S251), the MCU 201 stores the preset PCM data and the identification information included in the command in at least one of the preset data area PD2 or the preset data area PD3 (step S252). If the PCM data received in step S251 is encoded, the MCU 201 decodes the encoded preset PCM data. When the MCU 201 of the game controller 200 does not receive a preset registration command (NO in step S251), the MCU 201 repeats the processing of step S251. Thereby, thereafter, the MCU 201 of the game controller 200 can output sound based on the preset PCM data registered in advance by the preset playback command specifying the identification information Pi1 being transmitted from the game apparatus 100.

### [E. VARIOUS PLAYBACK REQUESTS BY GAME PROGRAM 102P2]

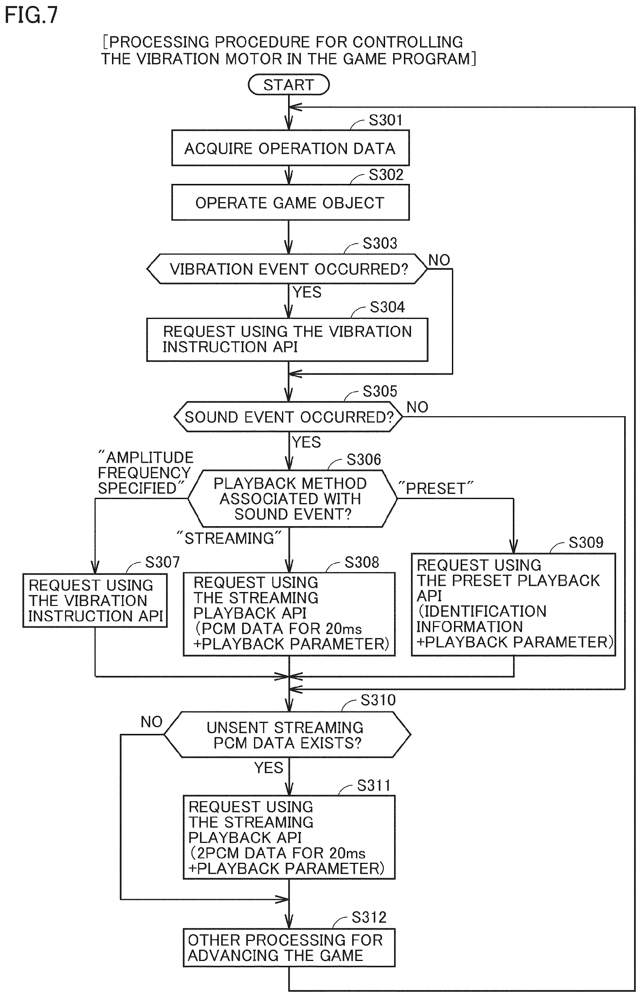

FIG. 7 is a flowchart showing a processing procedure for various processing for controlling the vibration motor 206 according to an event, executed by the game program 102P2. The processor 101 executing the game program 102P2 (hereinafter, simply referred to as "the game program 102P2") acquires operation data from the game controller 200 (step S301). The game program 102P2 operates a game object based on the acquired operation data (step S302). The game object is an object operated by the user in the virtual space in the game, for example, and may be a player character, a car body in a car racing game, etc.

The game program 102P2 determines whether a vibration event has occurred during the game based on the game object operating, or by a game internal event unrelated to the operation of the game object (step S303). If a vibration event has occurred in the game (YES in step S303), the game program 102P2 makes a request using the vibration instruction API to the system program 102P1 (step S304). That is, the game program 102P2 passes the vibration instruction data in the vibration file 105A corresponding to the occurred vibration event to the system program 102P1 via the vibration instruction API. At this time, the game program 102P2 may generate the vibration instruction data based on the vibration file 105A and pass the generated vibration instruction data to the system program 102P1.

If a vibration event has not occurred (NO in step S303), the game program 102P2 determines whether a sound event has occurred during the game based on the game object operating, or by a game internal event unrelated to the operation of the game object (step S305).

If a sound event has occurred (YES in step S305), the game program 102P2 determines whether preset playback is associated with the sound event, streaming playback is associated with it, or amplitude frequency specified playback is associated with it (step S306). Specifically, which of a preset playback instruction request, a streaming playback instruction request, or a playback instruction request specifying an amplitude and a frequency is executed depends on whether the code of the game program 102P2 executed when the sound event occurs is a code using the preset playback API, a code using the streaming playback API, or a code using the vibration instruction API.

If the code corresponding to the occurred sound event is a code using the vibration instruction API, the game program 102P2 makes a request using the vibration instruction API to the system program 102P1 (step S307). That is, the game program 102P2 passes the corresponding vibration instruction data in the sound file 105B (including parameters for a frequency and an amplitude, where a frequency in the audible area is specified) to the system program 102P1. The processing of step S307 is the same as the processing of step S304 (only the specified frequency is different).

If the code corresponding to the occurred sound event is a code using the streaming playback API, the game program 102P2 makes a request using the streaming playback API to the system program 102P1 (step S308). In step S308, the game program 102P2 uses the streaming playback API to read out the data for the first 20 ms of the data included in the streaming PCM data SD1 corresponding to the occurred sound event, passes it to the system program 102P1, and also passes the playback parameter.

If the code corresponding to the occurred sound event is a code using the preset playback API, the game program 102P2 makes a request using the preset playback API to the system program 102P1 (step S309). That is, the game program 102P2 passes the identification information Pi1 and the playback parameter to the system program 102P1.

After the processing of steps S307, S308, and S309, the game program 102P2 determines whether there is unsent streaming PCM data (step S310). That is, the game program 102P2 determines whether all the sampling data included in the streaming PCM data SD1 whose playback was started in step S308 has been passed to the system program 102P1. If all the sampling data included in the streaming PCM data SD1 to be played back has not been passed, the game program 102P2 determines that the streaming PCM data is in the middle of playback, that is, there is unsent streaming PCM data.

Then, the game program 102P2 transmits the PCM data for the first 20 ms of the unsent streaming PCM data and the playback parameter, and makes a request for streaming playback (step S311). In this way, the game program 102P2 does not transmit all of the streaming PCM data SD1 in a batch, but passes one or a plurality of sampling data. In other words, the streaming PCM data SD1 is divided into 20 ms data and sequentially passed to the system program 102P1. Thereafter, the game program 102P2 executes other processing for advancing the game (step S312), and the processing returns to step S301.

In this way, in the vibration control system 10 of the present embodiment, the game program 102P2 can make a control request for the vibration motor 206 using various APIs according to the sound event.

### [F. PRESET PLAYBACK PROCESSING BY SYSTEM PROGRAM AND MCU PROGRAM]

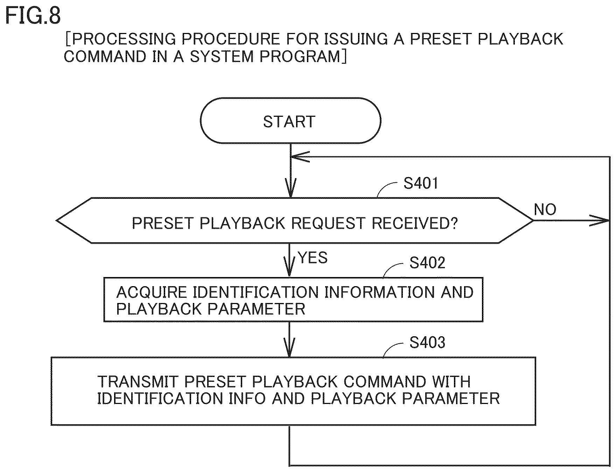

FIG. 8 is a flowchart showing a processing procedure for issuing a preset playback command in the system program 102P1. The processing of the flowchart shown in FIG. 8 is realized by the processor 101 executing the preset playback command program A2 included in the system program 102P1. The processor 101 executing the preset playback command program A2 of the system program 102P1 (hereinafter, sometimes referred to as "the system program 102P1") determines whether a preset playback request shown in step S309 of FIG. 7 has been received (step S401). If the preset playback request has not been received (NO in step S401), the processing of step S401 is repeated.

If the preset playback request has been received (YES in step S40 1), the system program 102P1 acquires the identification information Pi1 and the playback parameter from the game program 102P2 (step S402). The system program 102P1 transmits a preset playback command including the acquired identification information Pi1 and the playback parameter to the game controller 200 (step S403), and the processing returns to step S401.

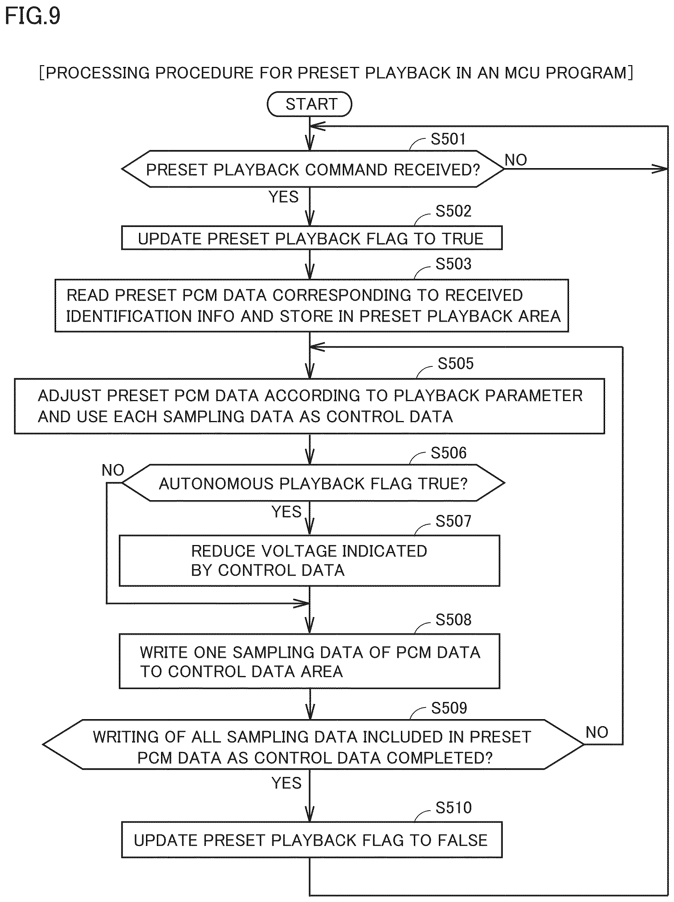

FIG. 9 is a flowchart showing a processing procedure for preset playback by the MCU program 203P. The processing of the flowchart shown in FIG. 9 is realized by the MCU 201 executing the MCU program 203P, and the execution is started based on power being supplied to the game controller 200 or the game controller 200 being connected to the game apparatus 100, for example.

The MCU 201 executing the MCU program 203P (hereinafter, sometimes referred to as "the MCU program 203P") determines whether a preset playback command has been received (step S501). If the preset playback command has not been received (NO in step S501), the MCU program 203P repeats the processing of step S501. If the preset playback command has been received (YES in step S501), the MCU program 203P updates the preset playback flag Fg1 in the exclusive control flag 2035 to True (step S502).

The MCU program 203P reads the preset PCM data PD1 corresponding to the received identification information Pi1 from the preset data areas PD2, PD3, and stores it in the preset playback area 204B4 (step S503).

The MCU program 203P sequentially reads the preset PCM data PD1 in the preset playback area 204B4 starting from the first sampling data, adjusts it according to the received playback parameter, and uses each sampling data (the sampling rate is a period of 0.125 ms, i.e., the sampling rate is 8 kHz) as the control data (step S505).

The MCU 201 determines whether the autonomous playback flag Fg3 is True (step S506). If the autonomous playback flag Fg3 is True (YES in step S506), the MCU program 203P reduces the voltage indicated by the control data set in S505 (for example, multiplies it by 0.7). Thereby, it becomes a countermeasure against exceeding the specified maximum voltage for the vibration motor 206 or the amplifier 205 even when autonomous playback and preset playback occur simultaneously. For example, 70% of the maximum voltage is allocated to the preset playback processing, and 30% of the maximum voltage is allocated to the autonomous playback processing. Note that the maximum voltage allocated to the preset playback processing and the autonomous playback processing is not limited to 7:3, and may be 8:2, 9:1, or 6:4.

If the autonomous playback flag Fg3 is False (NO in step S506), or after executing the processing of step S507, the MCU program 203P writes one sampling data of the PCM data to the control data area 204B2 (step S508). The control data for 0.125 ms written to the control data area 204B2 is transmitted to the amplifier 205 by DMA.

The MCU 201 determines whether the writing of all the sampling data included in the preset PCM data PD1 in the preset playback area 204B4 as control data to the control data area 204B2 is completed (step S509). If the writing of all the data is not completed (NO in step S509), the MCU 201 returns the processing to step S505. If the writing of all the data is completed (YES in step S509), the MCU 201 deletes the preset PCM data PD1 in the preset playback area 204B4, updates the preset playback flag Fg1 to False (step S510), and returns the processing to step S501.

In this way, the MCU 201 can play back the preset PCM data by only receiving the identification information Pi1 from the system program 102P1. When a plurality of game controllers 200 are connected to the game apparatus 100, if the PCM data itself is transmitted to each game controller 200 every time a sound event occurs, the sound generation may be delayed. In the present embodiment, only the identification information Pi1 is transmitted to each game controller 200 when a sound event occurs, and the PCM data registered in advance in each game controller 200 is played back, which can suppress the delay in sound generation in each game controller 200. Furthermore, since there is no communication of the PCM data itself between the game controller 200 and the game apparatus 100 when a sound event occurs, sound can be output without data loss, compared to transmitting the PCM data in real time. Therefore, preset playback may be used for sound that is desired to be output reliably.

### [G. STREAMING PLAYBACK PROCESSING BY SYSTEM PROGRAM AND MCU PROGRAM]

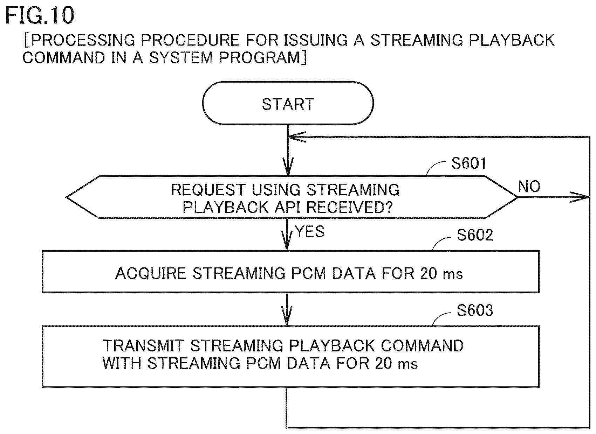

FIG. 10 is a flowchart showing a processing procedure for issuing a streaming playback command in the system program 102P1. The processing of the flowchart shown in FIG. 10 is realized by the processor 101 executing the streaming playback command program A3 included in the system program 102P1. The processor 101 executing the streaming playback command program A3 of the system program 102P1 (hereinafter, sometimes referred to as "the system program 102P1") determines whether a request using the streaming playback API shown in steps S308 and S311 of FIG. 7 has been received (step S601). If the request using the streaming playback API has not been received (NO in step S601), the processing of step S601 is repeated.

If the request using the streaming playback API has been received (YES in step S601), the system program 102P1 acquires the streaming PCM data for 20 ms from the game program 102P2 (step S602). The system program 102P1 transmits a streaming playback command including the acquired streaming PCM data for 20 ms to the game controller 200 (step S603), and the processing returns to step S601. That is, the processor 101 transmits a plurality of sampling data of the streaming PCM data SD1 to the game controller 200 at the same timing. As described above, the system program 102P1 may encode the PCM data in step S603 and transmit the encoded PCM data.

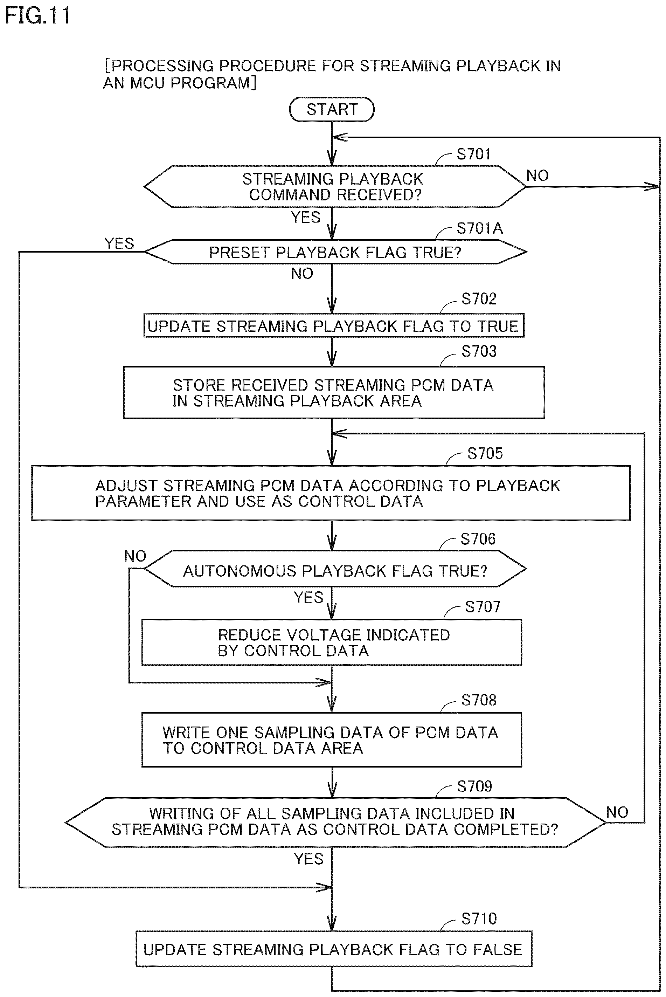

FIG. 11 is a flowchart showing a processing procedure for streaming playback in the MCU program 203P. The MCU 201 executing the MCU program 203P (hereinafter, sometimes referred to as "the MCU program 203P") determines whether a streaming playback command has been received (step S701). If the streaming playback command has not been received (NO in step S701), the MCU program 203P repeats the processing of step S701. If the streaming playback command has been received (YES in step S701), the MCU program 203P determines whether the preset playback flag Fg1 is True (step S701A). If the preset playback flag Fg1 is True (YES in step S701A), the MCU program 203P shifts the processing to step S710. Thereby, exclusive control is performed between the streaming playback processing and the preset playback processing, and the preset playback processing is prioritized over the streaming playback processing.

Steps S702 to S710 in FIG. 11 correspond to steps S502 to S510 in FIG. 9 by replacing the preset playback flag Fg1 with the streaming playback flag Fg2, the preset PCM data PD1 with the streaming PCM data SD1, and the preset playback area 204B4 with the streaming playback area 204B5. Therefore, the description of steps S702 to S710 in FIG. 11 will not be repeated.

In this way, the MCU 201 can execute sound output processing in real time based on the occurrence of a sound event by sequentially acquiring the streaming PCM data SD1 for 20 ms. Thereby, there is no need to transmit the PCM data in advance during the loading time of the game program 102P2, etc.

### [H. ENCODING AND DECODING PROCESSING WHEN VIBRATION INSTRUCTION DATA IS USED]

Hereinafter, the generation of a vibration based on the sound file 105B will be described. FIG. 12 is a diagram for explaining vibration instruction data based on the sound file 105B. FIG. 12 shows, from the left, the sound file 105B, vibration instruction data 114 obtained by encoding the sound file, and decoded vibration instruction data 110.

The sound file 105B stores vibration instruction data (data specifying parameters of a vibration frequency and an amplitude) that should be generated for each event. FIG. 12 illustrates an example in which melody A is output due to the occurrence of a specific sound event, as an example of the sound file 105B. Note that the vibration instruction data may not be stored in advance in a file format, and may be generated in real time.

Melody A is a sound related to music, and is a sound representing BGM during game progress, or a playing sound of a musical instrument arranged in the virtual game space, for example. That is, a melody is a set of a plurality of sounds output sequentially and continuously, and is a sound that expresses music. Melody A is a combination of a plurality of notes of a musical scale included in the 12-tone equal temperament. Specifically, melody A is configured by outputting A0 (La0) for 5 ms, A#0 (La#0) for 5 ms, and A1 (La1) for 5 ms. Note that melody A may be a combination of more sounds, or may be a single note. The sound generated by the sound event may include sound other than the frequency of the note on the musical scale. It may also be an SE instead of a melody.

The frequency of each musical scale is specified in advance. The frequency of A0 (La0) is "27.500", and in the example of FIG. 12, an amplitude of "1.0" is instructed for the frequency of the A0 (La0). When it is desired to output the sound of A0 (La0), a frequency of 27.500 Hz is instructed, and a waveform signal of 27.500 Hz having the allowable maximum voltage as the peak voltage is output to the vibration motor 206. However, the sound file 105B may specify the musical scale itself instead of the frequency.

Next, the encoding of the frequency will be described. The processor 101 generates the frequency included in the encoded vibration instruction data using the following frequency encoding formula. 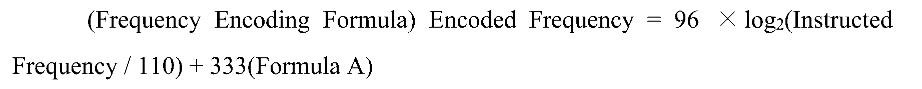 (Frequency Encoding Formula) Encoded Frequency = 96 × log2(Instructed Frequency / 110) + 333(Formula A) (Formula A)

Since the frequency of A0 (La0) is 27.500 Hz, the encoded frequency becomes 141 using the frequency encoding formula. In the present embodiment, the encoded frequency is a non-negative integer. Note that the value represented as "96" in the frequency encoding formula may be referred to as a "first constant". The value represented as "110" in the encoding formula may be referred to as a "second constant". The value represented as "333" in the encoding formula may be referred to as a "third constant". The frequency encoding formula performs encoding based on each note on the musical scale of the 12-tone equal temperament.

If a frequency of 29.135 Hz is instructed, 149 is calculated using the frequency encoding formula. In this case, the note "A#0 (La#0)" is instructed. If a frequency of 55.000 Hz is instructed, 237 is calculated using the frequency encoding formula. In this case, the note "A1 (La1)" is instructed.

Next, the encoding of the amplitude will be described. The processor 101 encodes the amplitude included in the vibration instruction data using the following amplitude encoding formula. The amplitude is linearly encoded in the encoding processing. Linearly encoded means that the encoded value is proportional to the amplitude value. In the present example, the value of 0 to 1.0 proportional to the amplitude value is encoded into a value divided into 1024 equal parts. $\left(Amplitude Encoding Formula\right) Encoded Amplitude = Amplitude \times 1023$ (Formula r)

In the example of FIG. 12, since the amplitude instructed by the vibration instruction data is 1.0 in all cases, the encoded amplitude becomes 1023 using the amplitude encoding formula.

The processor 101 generates encoded vibration instruction data 114 including the encoded frequency and the encoded amplitude. Thereafter, the encoded vibration instruction data 114 including the encoded frequency and the encoded amplitude is transmitted from the game apparatus 100 to the game controller 200. The processor 202 of the game controller 200 decodes the encoded vibration instruction data 114 using the frequency decoding program De1. The processor 202 decodes the encoded frequency using the following frequency decoding formula. Note that the frequency decoding formula is a formula obtained by transforming the frequency encoding formula, and is substantially the same formula. 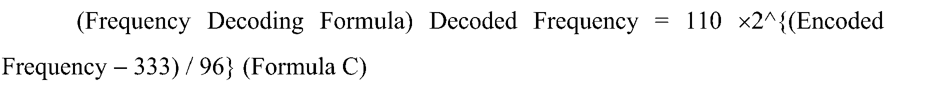 (Frequency Decoding Formula) Decoded Frequency = 110 ×2^{(Encoded Frequency - 333) / 96} (Formula C) The value represented as "96" in the frequency decoding formula corresponds to the "96" in the frequency encoding formula. Similarly, the values represented as "110" and "333" in the frequency decoding formula also correspond to the "110" and "333", respectively, in the frequency encoding formula.

When the encoded frequency is 141, the decoded frequency becomes 27.500 Hz when calculated using the decoding formula. When the encoded frequencies are 149 and 237, the decoded frequencies become 29.135 Hz and 55.000 Hz, respectively, when calculated using the decoding formula.

The numerical value of the frequency indicated by the vibration instruction data shown in FIG. 12 has not changed before and after encoding and decoding, and it will be played back at the frequencies of "A0 (La0)", "A#0 (La#0)", and "A1 (La1)". In this way, in the vibration control system 10 of the present embodiment, when any of the notes on the musical scale of the 12-tone equal temperament is instructed, the frequency of each note on the musical scale of the 12-tone equal temperament is maintained, and it can be output from the vibration motor 206 without data degradation.

Next, the decoding of the amplitude will be described. The processor 202 decodes the encoded amplitude using the following amplitude decoding formula. 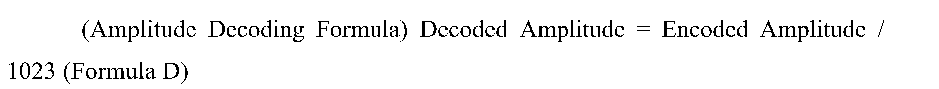 (Amplitude Decoding Formula) Decoded Amplitude = Encoded Amplitude / 1023 (Formula D)

The processor 202 rounds off the decimal part of the value calculated using the amplitude decoding formula. As a result, as shown in FIG. 12, the decoded amplitude becomes the same value as before encoding.

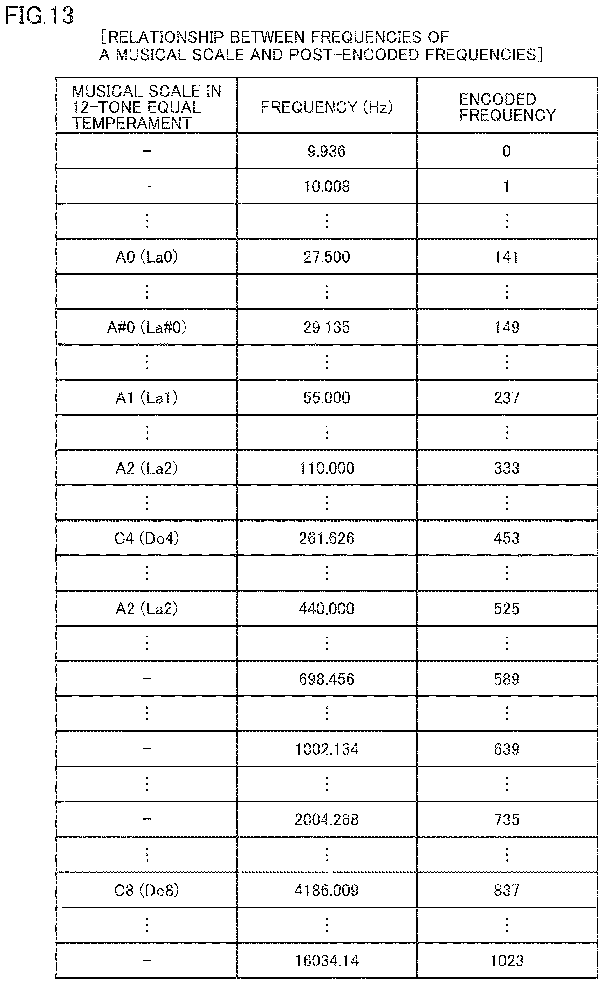

FIG. 13 is a table showing the relationship between the frequencies of the musical scale in the 12-tone equal temperament and the post-encoded frequencies. FIG. 13 shows a part of the musical scale in the 12-tone equal temperament and the frequency corresponding to the musical scale. The 12-tone equal temperament is a musical scale that represents an interval of one octave divided into 12 equal parts. For example, in the case of a piano musical scale, it is composed of 88 notes including "A0 (La0)", "A#0 (La#0)" to "B7 (Si7)", and "C8 (Do8)". The frequency is specified in advance for all 88 notes. Each note included in the 12-tone equal temperament can be represented by a geometric sequence with the first term as 27.500 Hz and the common ratio as 2^(1/12).

The lowest note among the 88 notes is "A0 (La0)", and its frequency is 27.500 Hz. The next lowest note is "A#0 (La#0)", and its frequency is approximately 29.135 Hz. The frequency of "A#0 (La#0)", which is one tone higher than "A0 (La0)", is a value obtained by multiplying the frequency of "A0 (La0)" by the common ratio (2^(1/12)). The highest note among the 88 notes is "C8 (Do8)", and its frequency is approximately 4186.009 Hz. A part of the other notes included in the 12-tone equal temperament is also shown in FIG. 13. In the present example, the frequency of the musical scale is instructed as a value rounded off to the third decimal place, but in a certain situation, a frequency value including a value below the third decimal place may be instructed.

Furthermore, as shown in FIG. 13, the frequency of "A1 (La1)", which is one octave (12 tones) higher than "A0 (La0)", is a value twice the frequency of "A0 (La0)". In other notes included in the 12-tone equal temperament, the frequency also doubles when the pitch increases by one octave.

The denominator "12" in the exponent part of the common ratio 2^(1/12) represents the number of notes included in one octave. By changing the denominator in the exponent part of the common ratio, other equal temperaments such as 5-tone equal temperament, 7-tone equal temperament, 15-tone equal temperament, 17-tone equal temperament, etc. can be represented.

As described above, in the present embodiment, the encoded frequency is decoded using the following frequency decoding formula to obtain the decoded frequency. 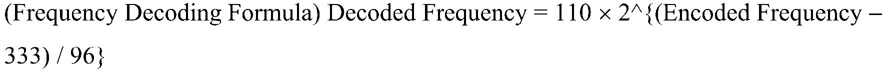 (Frequency Decoding Formula) Decoded Frequency = 110 × 2^{(Encoded Frequency - 333) / 96}

In the present example, the encoded frequency can take a value from 0 to 1023. Therefore, the minimum value of the decoded frequency is a value obtained by multiplying 110 by 2^(-333 / 96), that is, "9.936 Hz" when the encoded frequency shown in FIG. 13 is 0. The maximum value of the decoded frequency is a value obtained by multiplying 110 by 2^((1023 - 333) / 96), that is, "16034.140 Hz" when the encoded frequency shown in FIG. 13 is 1023. The common ratio of the sequence that can be represented by the decoded frequency is 2^(1 / 96).

One hundred and ten in the frequency decoding formula is a multiple of "27.5", which is the first term of the 12-tone equal temperament. Ninety-six in the frequency decoding formula is a multiple of 12, which represents the number of notes included in one octave. The minimum value of the decoded frequency "9.936 Hz" is greater than the frequency 27.500 Hz of the lowest note "A0 (La0)" in the 12-tone equal temperament, and the maximum value of the decoded frequency "16034.140 Hz" is smaller than the frequency 4186.009 Hz of the highest note "C8 (Do8)" in the 12-tone equal temperament. From this, the frequency decoding formula described above represents a sequence that includes all the frequencies of the 88 notes on the 12-tone equal temperament and includes a number of frequencies greater than 88 notes. The decoded frequency can represent all the frequencies of the 88 notes on the 12-tone equal temperament.

Therefore, as described in FIG. 13, the frequencies corresponding to "A0 (La0)", "A#0 (La#0)", and "A1 (La1)" in the musical scale of the 12-tone equal temperament are output while maintaining the frequencies of ''A0 (La0)", "A#0 (La#0)", and "A1 (La1)", respectively, even in decoding. By using the frequency encoding formula and the decoding formula described above, encoding and decoding can be performed while maintaining the frequencies of all the notes among the 88 notes included in the 12-tone equal temperament.

In this way, in the present example, the encoding and decoding of the vibration instruction data take into account the audio frequency, but it may not take into account the audio frequency.

FIG. 14 is a diagram for explaining vibration instruction data based on the vibration file 105A. FIG. 14 explains that the control of the vibration motor 206 is performed based on the vibration file 105A in addition to the sound file 105B. FIG. 14 shows the vibration file 105A and the sound file 105B, encoded vibration instruction data 114, and decoded vibration instruction data 110. Hereinafter, the contents of the vibration file 105A and the sound file 105B in FIG. 14 will be described.

The vibration file 105A, similarly to the sound file 105B, includes an event name, an event occurrence condition, and a frequency and an amplitude as data representing the vibration content. The data including the first vibration event to the third vibration event is an example of the vibration file 105A. The data including the first sound event to the third sound event is an example of the sound file 105B in FIG. 14.

FIG. 14 shows an example of the vibration file 105A and the sound file 105B when the game program 102P2 is an adventure game. The processor 101 executing the game program 102P2 generates the vibration instruction data based on the parameters of the frequency and the amplitude representing the vibration content in the vibration file 105A and the sound file 105B. For example, vibration instruction data of (100, 1.0) is generated corresponding to the first vibration event.

The event name "first vibration event" is associated with object 1 "sword" and object 2 "sword" as the event occurrence condition. The first vibration event is an event in which a vibration is generated by an object representing a sword and an object representing another sword colliding in the virtual space. The event name "first vibration event" is associated with a frequency "100" and an amplitude "1.0". That is, when the first vibration event occurs, a waveform signal of 100 Hz having the allowable maximum voltage at 100 Hz as the peak voltage is output to the vibration motor 206.

The second vibration event is a collision between a sword and a shield in the virtual space. In the second vibration event, a waveform signal of 50 Hz having 80% of the allowable maximum voltage value at 50 Hz as the peak voltage is output to the vibration motor 206.

The third vibration event is a collision between a sword and a rock in the virtual space. In the third vibration event, a waveform signal of 50 Hz having 70% of the allowable maximum voltage value at 50 Hz as the peak voltage is output to the vibration motor 206.

The event name "first sound event" is associated with object 1 "sword" and object 2 "sword". The first sound event is an event that generates a sound to represent the sound of an object representing a sword and an object representing a sword colliding in the virtual space of the game. The event name "first sound event" is associated with a frequency "2000" and an amplitude "1.0". In the first sound event, a waveform signal of 2000 Hz having the allowable maximum voltage value at 2000 Hz as the peak voltage is output to the vibration motor 206.

The second sound event is a collision between a sword and a shield in the virtual space. In the second sound event, a waveform signal of 1000 Hz having 80% of the allowable maximum voltage value at 1000 Hz as the peak voltage is output to the vibration motor 206. The third sound event is a collision between a sword and a rock in the virtual space. In the third sound event, a waveform signal of 700 Hz having 70% of the allowable maximum voltage value at 700 Hz as the peak voltage is output to the vibration motor 206.

In this way, in the present embodiment, two pieces of vibration instruction data that output a vibration and a sound, respectively, are generated by the collision of objects in the virtual space. Specifically, when a sword and a sword collide in the virtual space, the vibration instruction data based on the first vibration event and the vibration instruction data based on the first sound event are generated. Thereby, the game controller 200 can output both the vibration and the sound at the same timing to represent the collision of objects in the virtual space.

Next, the encoding of the frequency in FIG. 14 will be described. Since the frequency instructed by the vibration instruction data based on the first vibration event is 100 Hz, the encoded frequency becomes 319.7996617 using the frequency encoding formula (Formula A), and the encoded value is an integer value, which is 319. Next, the processor 101 executes an approximate value specifying processing to determine whether "319" or "320" is appropriate as the encoded frequency. The approximate value specifying processing will be described later. As a result of the approximate value specifying processing, the encoded frequency based on the first vibration event becomes 320, as shown in FIG. 14.

In the case of the second and third vibration events, in which a frequency of 50 Hz is instructed, 223.7996617 is calculated using the frequency encoding formula (Formula A), and the encoded value is 223. As a result of the approximate value specifying processing, the value "224" becomes the encoded frequency, as shown in FIG. 14. Similarly, FIG. 14 shows the encoded frequencies for the frequency of 2000 Hz, the frequency of 1000 Hz, and the frequency of 700 Hz.

Since the amplitude instructed by the vibration instruction data based on the first vibration event is 1.0, the encoded amplitude becomes 1023 using the amplitude encoding formula (Formula C). In the case of the second vibration event and the second sound event, in which an amplitude of 0.8 is instructed, 818.4 is calculated using the amplitude encoding formula (Formula C). In the amplitude, the numerical value below the decimal point is rounded off by rounding. FIG. 14 shows the value "818", which is rounded off to an integer, as the encoded frequency. The illustration of other data examples for the encoding of the amplitude is omitted.

When the encoded frequency is 320, the decoded frequency becomes 100.1447546 Hz when calculated using the decoding formula (Formula B). The processor 202 sets the number of effective digits of the floating point (e.g., six decimal places). That is, the decoded frequency based on the first vibration event becomes 100.145 Hz. FIG. 14 also shows the decoded frequencies obtained by the frequency decoding formula (Formula B) for events other than the first vibration event. The processor 202 rounds off the decimal part of the value calculated using the amplitude decoding formula (Formula D). As a result, as shown in FIG. 14, the decoded amplitude becomes the same value as before encoding.

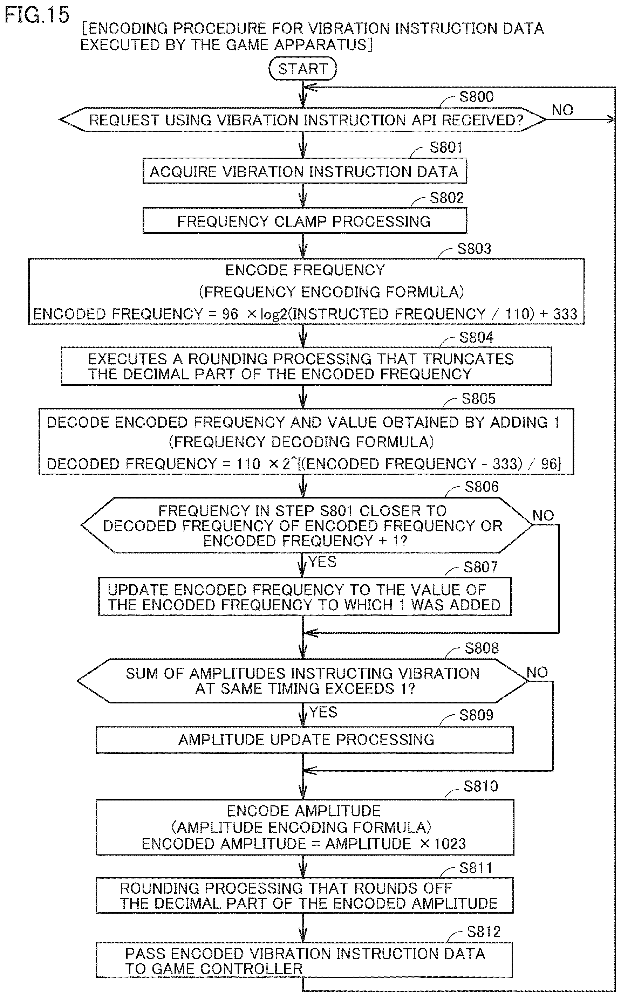

FIG. 15 is a flowchart showing the encoding procedure for vibration instruction data executed by the game apparatus 100. The system program 102P1 determines whether a request using the vibration instruction API shown in steps S304 and S307 of FIG. 7 has been received (step S800). If the request using the vibration instruction API has not been received from the game program 102P2 (NO in step S800), the processing of step S800 is repeated.

The system program 102P1 acquires the vibration instruction data (including parameters for a frequency and an amplitude) from the game program 102P2 via the vibration instruction API (step S801). Note that, in step S801, the amplitude parameter specified is adjusted in consideration of the maximum input voltage at the specified frequency (the specified amplitude is reduced at a frequency where vibration is easy, according to the ease of vibration for each frequency). The system program executes frequency clamp processing (step S802). The clamp processing is an exception processing for when a frequency exceeding the range of frequencies that can be represented by the decoding formula (Formula C) described above is specified by the vibration instruction data.

As described above, the minimum value of the decoded frequency is "9.936 Hz", and the maximum value of the decoded frequency is "16034.140 Hz". Therefore, when the processor 101 receives a frequency smaller than "9.936 Hz" from the game program 102P2 in step S801, the processor 101 rewrites the frequency included in the vibration instruction data to "9.936 Hz". Furthermore, when the processor 101 receives a frequency larger than "16034.140 Hz" from the game program 102P2 in step S801, the processor 101 rewrites the frequency included in the vibration instruction data to "16034.140 Hz".

Next, the system program encodes the frequency included in the vibration instruction data based on the frequency encoding formula (Formula A) described above (step S803). That is, the encoded frequency is calculated. Next, the system program executes a rounding processing that truncates the decimal part of the encoded frequency calculated in step S803 (step S804).

The system program decodes the encoded frequency calculated in step S804 and the value obtained by adding 1 to the encoded frequency using the decoding formula (Formula B) described above (step S805). Furthermore, the system program determines whether the frequency included in the vibration instruction data acquired in step S801 is closer to the decoded frequency obtained by decoding the encoded frequency calculated in step S804 or the decoded frequency obtained by decoding the encoded frequency to which 1 was added in step S805 (step S806). Note that, in step S805, if a table of frequency values and encoded values is available, the decoded value does not need to be calculated each time.

If the decoded frequency obtained by decoding the encoded frequency to which 1 was added in step S805 is closer to the frequency included in the vibration instruction data acquired in step S801 (YES in step S806), the system program updates the encoded frequency to the value of the encoded frequency to which 1 was added in step S805 (step S807). If the decoded frequency obtained by decoding the encoded frequency calculated in step S804 is closer to the frequency included in the vibration instruction data acquired in step S801 (NO in step S806), the encoded frequency calculated in step S804 becomes the encoded frequency. The processing for calculating the fraction of the frequency shown in steps S804 to S807 corresponds to the "approximate value specifying processing" described above.

The system program determines whether the sum of the amplitudes included in the vibration instruction data instructing a vibration at the same timing exceeds 1 (step S808). The vibration instruction data instructing a vibration at the same timing is, for example, the vibration instruction data based on the first vibration event and the vibration instruction data based on the first sound event described in FIG. 14. Note that the start time and the end time of the vibration do not have to be the same, and it is sufficient if they partially overlap.

The system program updates the amplitude of each vibration instruction data so that the vibration is not performed with an amplitude exceeding 1 at the same timing. Specifically, the sum of the instructed amplitude of the first vibration event and the instructed amplitude of the first sound event is "2.0", which exceeds 1 (YES in step S808). In this case, the processor 101 performs amplitude update processing (step S809).

The amplitude update processing is a processing that recalculates the amplitudes so that the total value of the instructed amplitudes becomes "1.0" while maintaining the ratio of the instructed amplitude of the first vibration event to the instructed amplitude of the first sound event. Since the ratio of the instructed amplitude of the first vibration event to the instructed amplitude of the first sound event is 1:1, the instructed amplitude of the first vibration event and the instructed amplitude of the first sound event are updated to "0.5" and "0.5", respectively.

Next, the system program encodes the amplitude included in the updated vibration instruction data based on the amplitude encoding formula (Formula B) described above (step S810). Furthermore, if the sum of the instructed amplitudes does not exceed 1 (NO in step S808), the processor 101 does not perform the amplitude update processing, and encodes the amplitude included in the vibration instruction data based on the amplitude encoding formula (Formula B) described above (step S810). That is, the encoded amplitude is calculated. The processor 101 executes a rounding processing that rounds off the decimal part of the encoded amplitude based on rounding (step S811). Note that, in the encoding of the amplitude as well, similar to the frequency encoding processing shown in steps S805 to S807, decoding processing may be performed on the encoded amplitude and the value obtained by adding 1 to the encoded amplitude, and the value closer to the original amplitude may be adopted.

The system program passes the encoded vibration instruction data including the encoded frequency and the encoded amplitude to the game controller 200 (step S812), and returns the processing to step S800.

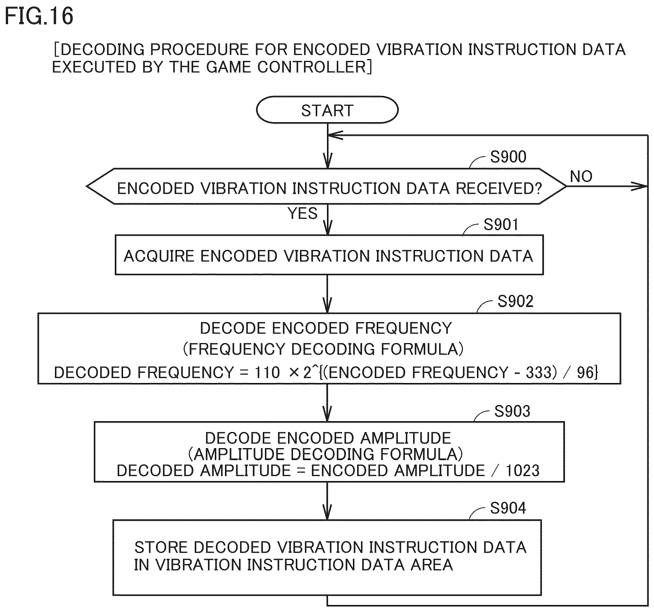

FIG. 16 is a flowchart showing the decoding procedure for encoded vibration instruction data executed by the game controller 200. The MCU program determines whether the encoded vibration instruction data has been received (step S900). If the encoded vibration instruction data has not been received (NO in step S900), the MCU program repeats the processing of step S900. If the encoded vibration instruction data has been received (YES in step S900), the MCU program acquires the encoded vibration instruction data (step S901). The processor 202 decodes the encoded frequency based on the frequency decoding formula (Formula C) described above (step S902). That is, the decoded frequency is calculated. Note that the decoded frequency may be truncated at the number of effective digits or may be rounded off.

The MCU program decodes the encoded amplitude based on the amplitude decoding formula (Formula D) described above (step S903). That is, the decoded amplitude is calculated. The MCU program stores the decoded vibration instruction data in the vibration instruction data area 204B1 based on the decoded frequency and the decoded amplitude (step S904).

In this way, in the present embodiment, by using the frequency encoding and decoding formulas described above, it is possible to perform encoding processing that takes sound into account while suppressing the communication amount between the game apparatus 100 and the game controller 200.

Hereinafter, an example in which a part of the constants in the encoding formula is changed will be described. In the frequency encoding formula and the decoding formula, the first constant may be a multiple of the number of notes included in one musical scale. In equal temperament, the frequency ratio of the musical scale can be determined from the number of notes included in one musical scale. If the musical temperament to be represented is the 12-tone equal temperament, the first constant may be a multiple of 12. If the musical temperament to be represented is the 7-tone equal temperament, the first constant may be a multiple of 7. Therefore, by adjusting the first constant, it is possible to represent any of the 5-tone equal temperament, 7-tone equal temperament, 12-tone equal temperament, 15-tone equal temperament, 17-tone equal temperament, 19-tone equal temperament, 22-tone equal temperament, 31-tone equal temperament, 34-tone equal temperament, 41-tone equal temperament, 53-tone equal temperament, and 72-tone equal temperament.

In the frequency encoding formula and the decoding formula, the second constant may be the frequency of any note in the equal temperament, or may be a value obtained by multiplying the frequency of any note in the equal temperament by 21/ First Constant or 2-1/First Constant a specified number of times. That is, the second constant is 2N/First Constant, where N is an integer. By doing so, the decoded frequency will include the frequency of each note in the equal temperament. Note that the second constant may be a multiple of the lowest note (27.500 Hz) among the notes included in the equal temperament. For example, the second constant can be a value such as 55, 82.5, 110, 137.5, or 220.

The third constant shifts the range of the representable frequency in the encoding formula (Formula A), and may be determined according to the lower limit and the upper limit of the frequency desired to be representable.

### [I. AMPLITUDE FREQUENCY SPECIFIED PLAYBACK PROCESSING BY MCU (PROCESSING WHEN VIBRATION INSTRUCTION DATA IS USED)]

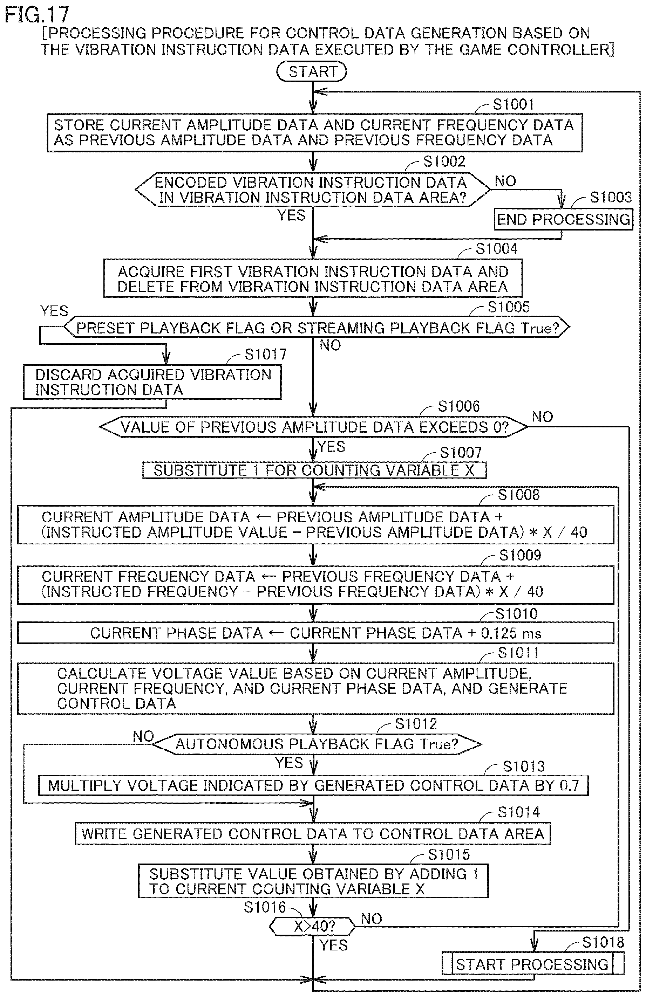

Hereinafter, the generation of control data using the decoded vibration instruction data stored in the vibration instruction data area 204B1 in step S904 will be described. FIG. 17 is a flowchart showing a processing procedure for control data generation based on the vibration instruction data executed by the game controller 200. In amplitude frequency specified playback, the control data is generated by the processor 202 based on the decoded vibration instruction data stored in the vibration instruction data area 204B1. The control data is typically data indicating a voltage value for driving the vibration motor 206, and is data indicating the voltage value at each instant of the waveform with the specified frequency and amplitude. The data indicating the voltage value at each instant is, in other words, an instantaneous value. Hereinafter, the control data is output at a specified interval, and this interval is referred to as a "control cycle".

The MCU 201 generates a number of control data obtained by dividing the vibration instruction cycle (the cycle of instruction by the vibration instruction data) by the control cycle, from one piece of vibration instruction data. In the present embodiment, since the vibration instruction cycle is a period of 5 ms and the control cycle is 0.125 ms, the processor 202 generates 40 pieces of control data from one piece of vibration instruction data. A reference waveform is determined for each control cycle (0.125 ms) based on the frequency value and the amplitude value of the decoded vibration instruction data 110. The reference waveform is a waveform determined for each control cycle, and is a waveform for specifying the voltage value output as the control data. The processor 202 determines the voltage value output as the control data based on the reference waveform.

The processing of the flowchart shown in FIG. 17 is realized by the processor 202 executing the MCU program 203P. The processing of the flowchart shown in FIG. 17 is started based on, for example, power being supplied to the game controller 200.

In the volatile memory 204, a current amplitude data area 204V1, a current frequency data area 204V2, and a current phase data area 204V3 are prepared for the decoded vibration instruction data, and they are areas for storing current amplitude data, current frequency data, and current phase data, respectively.

In step S1001, the processor 202 copies the current amplitude data in the current amplitude data area 204V1 and the current frequency data in the current frequency data area 204V2 to a separate area of the volatile memory 204. Specifically, the current amplitude data and the current frequency data are stored as previous amplitude data and previous frequency data in the previous amplitude data area 204V4 and the previous frequency data area 204V5, respectively (step S1001). Note that, when the processor 202 executes the flowchart shown in FIG. 17 for the first time after the game controller 200 is launched, the processor 202 stores "0V" as the value of the current amplitude data and the previous amplitude data, "0Hz" as the value of the current frequency data and the previous frequency data, and "0 degree" as the value of the current phase data, as initialization processing.

The processor 202 determines whether there is encoded vibration instruction data in the vibration instruction data area 204B1 (step S1002). If there is no encoded vibration instruction data in the vibration instruction data area 204B1 (NO in step S1002), the processor 202 executes end processing (step S1003). The end processing may be a processing that newly generates vibration instruction data by setting "0" as the amplitude value and setting the value of the previous frequency data area 204V5 stored in step S1001 as the frequency value of the vibration instruction data for the vibration instruction data, and stores it in the vibration instruction data area 204B1, for example.

Thereby, control data that gradually decreases to 0 is generated by the processing from S1006 to S1014 described later, after the vibration by the encoded vibration instruction data 110 instructed by the game program 102P2 ends. This vibration is also referred to as an end time vibration. The immediate preceding frequency value means the frequency value used for the immediate preceding control, or the frequency value indicated by the immediate preceding vibration instruction data. Similarly, the immediate preceding amplitude value means the amplitude value used for the immediate preceding control, or the amplitude value indicated by the immediate preceding vibration instruction data.

Note that, after the vibration instruction data stored in step S1003 is processed in S1004 to S1015, when returning to S1002 again, there may be a case where the decoded vibration instruction data does not exist in the vibration instruction data area 204B1 again. In this case, the vibration instruction data with an amplitude value of "0" is stored in S1003, and control data with a voltage value of zero is continuously output in the subsequent processing. In this way, in the present example, when the vibration by the vibration instruction data instructed by the game program 102P2 ends and the vibration instruction data does not exist in the vibration instruction data area 204B1, control data with a voltage value of zero is continuously output.

Next, the processor 202 acquires the first vibration instruction data in the vibration instruction data in the vibration instruction data area 204B1, and deletes the vibration instruction data from the vibration instruction data area 204B1 (step S1004). The vibration instruction data stored earliest in the vibration instruction data area 204B1 is stored at the head of the vibration instruction data area 204B1. When the vibration instruction data exists in the vibration instruction data area 204B1 in step S1002 (YES in step S1002), the processor 202 executes the processing of step S1004.

The processor 202 determines whether the preset playback flag Fg1 or the streaming playback flag Fg2 is True (step S1005). If the preset playback flag Fg1 or the streaming playback flag Fg2 is True (YES in step S1005), the processor 202 discards the acquired vibration instruction data (step S1017), and returns the processing to step S1001. Thereby, the playback processing of the control data based on the vibration instruction is not performed during the preset playback processing or the streaming playback processing. That is, exclusive control is performed among the preset playback processing, the streaming playback processing, and the vibration instruction processing, and the vibration instruction processing has the lowest priority.

If the preset playback flag Fg1 or the streaming playback flag Fg2 is not True (NO in step S1005), the processor 202 determines whether the value of the previous amplitude data stored in step S1001 exceeds 0 (step S1006). If the value of the previous amplitude data exceeds 0 (YES in step S1006), it can be determined that the vibration has been continuing from before, and the flow shifts to the flow for vibration continuation from step S1006 onwards. The state where the vibration has been continuing from before is, in other words, a state where the vibration is not starting from a non-vibrating state.

In step S1007, the processor 202 substitutes 1 for the counting variable X (step S1007). The counting variable X is an area prepared in the volatile memory 204, and is a counter variable for repeating the processing 40 times to generate 40 pieces of control data.

In step S1008, the processor 202 substitutes a value for the current amplitude data. In step S1008, the processor 202 subtracts the value of the previous amplitude data from the instructed amplitude value. The instructed amplitude value means the amplitude value indicated in the encoded vibration instruction data, and the instructed frequency means the frequency indicated in the encoded vibration instruction data. The processor 202 multiplies the subtraction result by a value obtained by dividing the number stored in the counting variable X by 40. The processor 202 stores the value obtained by adding the previous amplitude data to the multiplication result in the current amplitude data (step S1008).

In step S1009, the processor 202 substitutes a value for the current frequency data. In step S1009, the processor 202 subtracts the value of the previous frequency data from the instructed frequency. The processor 202 multiplies the subtraction result by a value obtained by dividing the number stored in the counting variable X by 40. The processor 202 stores the value obtained by adding the value of the previous frequency data to the multiplication result in the current frequency data (step S1009).

By the processing of steps S1008 and S1009, the amplitude value and the frequency of the reference waveform referred to for generating the control data are stored in the current amplitude data and the current frequency data. In step S1010, the processor 202 substitutes a value for the current phase data. Specifically, the processor 202 advances the phase data value stored in the current phase data by 0.125 ms based on the value of the current frequency data. Next, the processor 202 calculates a voltage value based on the current amplitude data, the current frequency data, and the current phase data, and generates control data corresponding to the calculated voltage value (step S1011). At this time, as described above, since the instructed amplitude data is data normalized with respect to the maximum voltage for each instructed frequency, the control data is generated by referring to the maximum voltage value corresponding to the frequency indicated by the current frequency data.

The processor 202 determines whether the autonomous playback flag Fg3 is True (step S1012). If the autonomous playback flag Fg3 is True (YES in step S1012), the processor 202 multiplies the voltage indicated by the generated control data for 0.125 ms by 0.7. Thereby, similar to step S507 of FIG. 9, it becomes possible to simultaneously execute the autonomous playback processing described later and the vibration based on the vibration instruction without exceeding the specified maximum voltage for the vibration motor 206 or the amplifier 205.

If the autonomous playback flag Fg3 is False (NO in step S1012), or after executing the processing of step S1013, the processor 202 determines the amplitude and the current phase based on the value of the current amplitude data, the value of the current frequency data, and the value of the current phase data, and generates control data corresponding to the voltage value to be output to the amplifier 205. More specifically, the processor 202 determines a reference waveform from the value of the current amplitude data and the value of the current frequency data, generates a voltage value at the phase indicated by the value of the current phase data in the reference waveform as the control data for 0.125 ms, and writes the generated control data to the control data area 204B2 (step S1014). The control data for 0.125 ms written to the control data area 204B2 is transmitted to the amplifier 205 by DMA. The control data written to the control data area 204B2 is transmitted to the amplifier 205 by DMA, and the amplifier 205 amplifies the voltage up to the voltage value corresponding to the control data written to the control data area 204B2, and applies the amplified voltage to the vibration motor 206.

The processor 202 substitutes a value obtained by adding 1 to the current counting variable X for the counting variable X (step S1015). The processor 202 determines whether the value of the counting variable X exceeds 40 (step S1016). If the value of the counting variable X does not exceed 40 (NO in step S1016), the processor 202 returns the processing to step S1008.

If the value of the counting variable X exceeds 40 (YES in step S1016), the processor 202 returns the processing to step S1001. The case where the value of the counting variable X exceeds 40 means that the generation of 40 pieces of control data corresponding to the vibration instruction data acquired in step S1004 has been completed. That is, it means that the processing of the acquired vibration instruction data has been completed.

As shown in steps S1008 to S1011, the vibration control system 10 of the present embodiment performs processing that gradually approaches the instructed amplitude and frequency from the immediate preceding amplitude value and the immediate preceding frequency when an amplitude and a frequency are instructed by the vibration instruction data. This is called interpolation processing. Note that this interpolation processing is not performed at the start of the vibration. Furthermore, 40 pieces of control data output every 0.125 ms are generated for one piece of vibration instruction data by the processing of steps S1008 to S1011.

Returning to step S1006, when the value of the previous amplitude data is 0 (NO in step S1006), the processor 202 determines that the vibration is starting, and executes start processing (step S1018). The case where the value of the previous amplitude data is 0 is when the vibration motor 206 starts operating from a stopped state. Note that, in step S1006, it may be determined that the previous amplitude data is substantially zero. Furthermore, in step S1006, instead of determining that the previous amplitude data exceeds 0, it may be determined that the previous control data exceeds 0. In this case, the start processing is executed when the previous amplitude data is 0, or when the previous amplitude data is not 0 but the control data is 0 due to the phase. In this case as well, it may be determined that it is substantially zero.

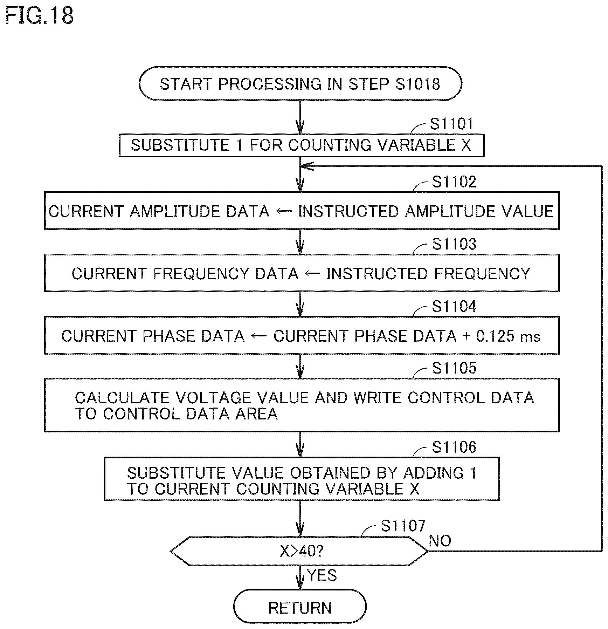

FIG. 18 is a flowchart showing a processing procedure for the start processing in step S1018. The processing of the flowchart shown in FIG. 18 is started by the processor 202 executing step S1018 in FIG. 17. That is, the flowchart of FIG. 18 is executed when the value of the previous amplitude data stored in step S1001 is 0 in step S205.

The processor 202 substitutes 1 for the counting variable X (step S1101). The processor 202 substitutes the instructed amplitude value for the current amplitude data (step S1102). Thereby, at the start of the vibration, the amplitude value quickly becomes the instructed value, and the effect of the impact vibration can be enhanced. Furthermore, the processor 202 substitutes the instructed frequency for the current frequency data (step S1103). The processor 202 substitutes a phase value obtained by advancing the phase by 0.125 ms from the value stored in the current phase data based on the frequency stored in the current frequency data for the current phase data (step S1104).

The processor 202 calculates the voltage value to be output to the amplifier 205 based on the current amplitude data and the current phase data, and writes the control data corresponding to the calculated voltage value to the control data area 204B2 (step S1105). The processor 202 substitutes a value obtained by adding 1 to the current counting variable X for the counting variable X (step S1106). Thereafter, the processor 202 determines whether the value of the counting variable X exceeds 40 (step S1107).

If the value of the counting variable X does not exceed 40 (NO in step S1107), the processor 202 returns the processing to step S1102. If the value of the counting variable X exceeds 40 (YES in step S1107), the processor 202 ends the processing of the flowchart of FIG. 18. Thereafter, the processor 202 executes the processing of step S1001 of FIG. 17.

In this way, the vibration control system 10 of the present embodiment can determine the control data corresponding to the voltage value for each control cycle, and finely control the vibration waveform. When changing the amplitude value, there is a possibility that noise may occur if the change is not made from a voltage value of 0V. Therefore, the vibration control system 10 gradually changes the amplitude value in units of the control cycle (0.125 ms) by executing steps S1008 to S1011. On the other hand, to prevent the occurrence of noise, the change of the amplitude value may be waited until the voltage value becomes 0V, but then the timing of the change of the amplitude value becomes late. The vibration control system 10 of the present embodiment usually suppresses the occurrence of noise by gradually changing the amplitude value or the frequency value within the vibration instruction cycle (5 ms), and generates a vibration with good initial response characteristics while suppressing the occurrence of noise because the vibration control system 10 controls the amplitude value to become the instructed amplitude value when the previous voltage value is 0V.

### [J. AUTONOMOUS PLAYBACK PROCESSING]

FIG. 19 is a flowchart showing a processing procedure for autonomous playback in the MCU program 203P. The processing of the flowchart shown in FIG. 19 is realized by the MCU 201 executing the MCU program 203P, and the execution is started based on, for example, power being supplied to the game controller 200 or the game controller 200 being connected to the game apparatus 100. In the present example, the autonomous playback function can be turned on/off via the user interface in the processing by the system program 102P1 of the game apparatus 100. When the user sets the autonomous playback function to on, an autonomous playback function on/off flag (not shown) stored in the non-volatile memory in the MCU 201 is set to on, and when the user sets the autonomous playback function to off, the flag is set to off. Although not shown, in the processing of FIG. 19, it may be determined whether this flag is on first (for example, before the processing of S1201), and if it is on, the processing from S1201 onwards may be started.

The game controller 200 in the present embodiment is configured such that the processor 202 itself of the game controller 200 determines whether a specified condition is satisfied based on the information input to the game controller 200, and outputs sound by vibrating the vibration motor 206 when the specified condition is satisfied. For example, the game controller 200 can output a specific sound every time the operation switch 210 is operated.

What kind of sound is output when the specified condition is satisfied is defined in the MCU program 203P. That is, PCM data or parameters of a frequency and an amplitude, and a playback parameter are associated with each condition. As described above, the game controller 200 may store the autonomous playback sound information as preset PCM data, or may store the autonomous playback sound information as parameters of a frequency and an amplitude.

Furthermore, in the game controller 200, 30% of the specified maximum voltage for the amplifier 205 or the vibration motor 206 is set as the upper limit of the voltage usable for autonomous playback. Thereby, as described in steps S506 and S507 of FIG. 9, steps S706 and S707 of FIG. 11, and steps S1012 and S1013 of FIG. 17 described above, autonomous playback and other sound playback can be executed simultaneously.

Referring to FIG. 19, the MCU 201 executing the MCU program 203P determines whether a specified condition for autonomous playback is satisfied (step S1201). If the specified condition is not satisfied (NO in step S1201), the MCU 201 repeats the processing of step S1201. If the specified condition is satisfied (YES in step S1201), the MCU 201 updates the autonomous playback flag Fg3 in the exclusive control flag 2035 to True (step S1202).

The MCU 201 stores the sound information associated with the satisfied specified condition in the autonomous playback area 204B6 (step S1203). As described above, in the present embodiment, the autonomous playback sound information is stored in advance in the preset data area PD2 as PCM data for autonomous playback, but the autonomous playback sound information may be stored as vibration instruction data (parameters of a frequency and an amplitude). In this case, the MCU program 203P may store the vibration instruction data in the vibration instruction data area 204B1. The MCU program 203P specifies one piece of PCM data corresponding to the satisfied condition among the PCM data stored in the preset data area PD2 with identification information.

The MCU program 203P adjusts the specified preset PCM data according to the playback parameter, and stores the adjusted PCM data in the autonomous playback area 204B6. Then, the sampling data of the PCM data stored in the autonomous playback area 204B6 is read out sequentially from the head and written to the control data area 204B2 (step S1206). The control data for 0.125 ms written to the control data area 204B2 is transmitted to the amplifier 205 by DMA.

The MCU program 203P determines whether the writing of all the sampling data included in the PCM data of the autonomous playback area 204B6 as control data to the control data area 204B2 is completed (step S1207). If the writing of all the data is not completed (NO in step S1207), the MCU 201 returns the processing to step S1205. If the writing of all the data is completed (YES in step S1207), the MCU 201 deletes the PCM data of the autonomous playback area 204B6, updates the autonomous playback flag Fg3 to False (step S1208), and returns the processing to step S1201.

In this way, the MCU 201 is configured to be able to output sound using the vibration motor 206 as a function of the game controller 200 itself without acquiring an instruction from the game apparatus 100. Thereby, the attractiveness of the game using the game controller 200 can be improved. Note that the content of the specified condition, the sound information associated with the specified condition, and the playback parameter, etc. may be changed based on an instruction from the game program 102P2.

Hereinafter, the change processing of the output from the vibration device by the output change program will be described. First, the output change processing based on the vibration instruction data will be described. Any of the following processing (1) to (3) may be adopted.
(1) When the on/off setting value (audio area) is set to off by the user, the system program 102P1 of the game apparatus 100 does not transmit the vibration instruction data to the game controller if the frequency specified by the vibration instruction is the audio frequency band, when receiving a request by the vibration instruction data described in FIG. 7 from the game program 102P2. For example, in FIG. 15, after the processing of S801, the system program 102P1 determines whether the on/off setting value (audio area) is set to off and whether the frequency specified in the acquired vibration instruction data is the audio frequency band, and if both of these determinations are affirmative, the processing of S802 to S812 is not executed.
(2) When the on/off setting value (audio area) is set to off and the instructed frequency of the acquired vibration instruction data is the audio frequency band, the system program 102P1 executes the processing of S802 to S812 after performing processing to change the amplitude of the vibration instruction data acquired in step S801 to zero or substantially zero after the processing of S801. When adopting the volume adjustment method, if the instructed frequency of the vibration instruction data acquired in S801 is the audio frequency band, the system program 102P1 adjusts the instructed amplitude of the acquired vibration instruction data according to the volume value (audio area). For example, the system program 102P1 may multiply the amplitude of the vibration instruction data acquired in step S801 by 0.5 if a volume value (audio area) that sets the output to 50% is set.
(3) The on/off setting value (audio area) data is transmitted to the MCU 201, and the MCU stores the setting value. The MCU 201, for example, when generating the control data based on the vibration instruction data, refers to the setting value, and if the setting is "off", sets the value of the control data to zero or substantially zero. When adopting the volume adjustment method, the MCU 201 adjusts the magnitude of the control data according to the volume value (audio area).

Next, the output change processing based on the PCM data will be described. Any of the following processing (1) to (3) may be adopted.
(1) When the on/off setting value (audio area) is set to off, the system program 102P1 does not transmit the command based on the request to the game controller even if it receives the streaming playback request and/or the preset playback request described in FIG. 7 from the game program 102P2. For example, in FIG. 8, if the system program 102P1 receives a preset playback request in step S401 and the on/off setting value (audio area) is set to off, the processing of steps S402 and S403 is not executed. Furthermore, in FIG. 10, if the system program 102P1 receives a streaming playback request in S601 and the on/off setting value (audio area) is set to off, the processing of steps S602 and S603 is not executed.
(2) When the on/off setting value (audio area) is set to off, the system program 102P1 changes the volume value specified by the playback parameter to zero or substantially zero in steps S403 and S603, and then transmits it to the game controller. In the case of the volume adjustment method, the volume value specified by the playback parameter may be adjusted according to the magnitude of the volume value (audio area).
(3) The on/off setting value (audio area) or the volume value (audio area) is transmitted from the game apparatus to the MCU, and the MCU stores the setting value or the volume value. When the on/off setting value (audio area) is set to off, the MCU 201 sets the value of the control data to zero or substantially zero when using the PCM data as the control data to be output to the amplifier 205. In the case of the volume adjustment method, the MCU 201 may adjust the value of the PCM data to be the control data according to the volume value (audio area).

When the amplifier 205 has a filter function or an equalizer function, the voltage output from the amplifier 205 to the vibration motor 206 may be adjusted according to the on/off setting value (audio area) or the volume adjustment value (audio area) using these functions. The adjustment using the function of the amplifier 205 can be applied to both the control based on the vibration instruction data and the control based on the PCM data. For example, when the on/off setting value (audio area) is set to "off", the MCU 201 may cut the audio frequency band using the filter function of the amplifier 205. Furthermore, when using the volume adjustment method, the MCU 201 may adjust the voltage output to the vibration motor 206 in the audio frequency band using the equalizer function of the amplifier 205 according to the volume value (audio area) using an amplifier having an equalizer function. In the above, the output change (on/off switching) or output adjustment (volume adjustment) of the audio frequency band has been described, but the output change or output adjustment of the tactile area and the output change or output adjustment of the whole area can also be controlled similarly (separately).

Furthermore, the PCM data may include the tactile area frequency band as well as the audio frequency band. In this case, the system program 102P1 or the MCU program may perform the filter processing on the PCM data, extract the data of the audio area, and then perform the processing described above based on the on/off setting value (audio area) or the volume value (audio area) on the extracted data of the audio area. If a setting value or a volume value for the tactile area is present, the data of the tactile area may be extracted by similar filter processing on the PCM data, and then similar processing may be performed on the extracted data of the tactile area. In this case, the control data is generated or produced using the PCM data obtained by summing the processed audio area data and the processed tactile area data. Furthermore, the game controller 200 of the present example may have an on/off flag for the autonomous playback function, and the user may be able to set the on/off of the autonomous playback function. In the present disclosure, "vibration instruction data" and "PCM data" may be collectively referred to as "vibration data". The output of the audio frequency band of the vibration device may be adjusted using the volume setting of the speaker of the game apparatus. That is, the user may be caused to set the volume value of the speaker using the system menu, etc., and the output of the audio frequency band of the vibration device may be adjusted as described above using the volume value.

### [K. VARIATIONS]

Hereinafter, variations will be described. In the above, an example has been described in which a request is made from the game program 102P2 to the system program 102P1 via an API, and the system program 102P1 executes processing in response to the request. However, a part or all of the processing performed in the game program 102P2 may be performed in the system program 102P1, and a part or all of the processing performed in the system program 102P1 may be performed in the game program 102P2. Furthermore, the PCM data transmitted to the game controller 200 may differ depending on the type of the game controller 200, for example.

Note that the flowcharts described above may include other processing than the processing shown in the figures, or may not include a part of the processing. Furthermore, the order of each processing is an example, and each processing may be executed simultaneously or in the reverse order, for example. Furthermore, each processing is described as being conveniently divided, but it may be integrated processing. Furthermore, each processing may be executed at a specified interval (e.g., every processing frame, every 1/30 second), for example. Furthermore, in the above description, even when data is described using the same term, each data does not need to be exactly the same. At least when certain information is substantially transmitted between certain data and other data, they may be regarded as the same data. The name of the data does not limit the range indicated by the data.

Furthermore, "processor" may mean one or a plurality of processors in one apparatus such as the main unit of the game apparatus 100, for example, or may mean a part or all of one or a plurality of processors included in each of a plurality of apparatuses such as the main unit and the controller, or the main unit, the controller, and a server, etc. The same applies to "memory".

Furthermore, the program that causes a computer to execute each processing may be a single program or may be a program group including a plurality of programs. "A certain program" does not need to mean one program, and may include a program group. Furthermore, the program does not need to be all stored in one apparatus. "A certain program" may mean the total sum of each program stored in a plurality of apparatuses included in an information processing system, for example. At least a part of the series of processing described above may be executed by a server in an information processing system including the game apparatus 100 and a server capable of communicating via a network. Note that the server may be composed of a plurality of information processing apparatuses, and the processing may be executed by the plurality of information processing apparatuses sharing the task.

### (Additional Aspect)

(Aspect1) A vibration control system comprising a vibration device configured to reproduce audio frequencies, the vibration control system comprising: one or more processors; and one or more memories storing instructions that cause the one or more processors to perform operations comprising: performing a first instruction for vibrating the vibration device by specifying an amplitude and a frequency of an audio frequency band; performing a second instruction for vibrating the vibration device by specifying PCM data; and controlling the vibration device according to each of the first instruction and the second instruction.

(Aspect2) The vibration control system according to aspect 1, wherein:
the controlling comprises, according to the first instruction, generating control data based on the specified amplitude and the specified frequency, and being performed by using the control data; and the controlling comprises, according to the second instruction, using the PCM data.

(Aspect3) The vibration control system according to aspect 2, wherein: a sampling rate of the PCM data is the same as a period of the control data.

(Aspect4) The vibration control system according to aspect 2, wherein: the first instruction is configured to specify the amplitude and the frequency in a first period; the controlling comprises, based on the first instruction, generating the control data in a second period shorter than the first period and using the control data; and the PCM data is data having a sampling period as the second period.

(Aspect5) The vibration control system according to aspect 1, comprising an information processing apparatus and a controller, wherein: the information processing apparatus comprising: one or more processors; and one or more memories storing instructions that cause the one or more processors of the information processing apparatus to perform first operations comprising: generating the first instruction to the controller, the controller comprising: the vibration device; an operation unit; one or more processors; and one or more memories storing instructions that cause the one or more processors of the controller to perform second operations comprising: generating the second instruction when an operation of the operation unit is performed; and performing the controlling.

(Aspect6) The vibration control system according to aspect 1, comprising an information processing apparatus and a controller, wherein: the information processing apparatus comprising: one or more processors; and one or more memories storing instructions that cause the one or more processors to perform first operations comprising: encoding specified data of the amplitude and the frequency associated with the first instruction by a first method; encoding the PCM data associated with the second instruction by a second method different from the first method; transmitting the encoded specified data of the amplitude and the frequency to the controller; and transmitting the encoded PCM data to the controller, the controller comprising: the vibration device; one or more processors; and one or more memories storing instructions that cause the one or more processors to perform second operations comprising: receiving the encoded specified data of the amplitude and the frequency; receiving the encoded PCM data; decoding the encoded specified data of the amplitude and the frequency when the first instruction is received; decoding the encoded PCM data when the second instruction is received; and performing the controlling.

(Aspect7) The vibration control system according to aspect 1, wherein: the operations further comprising performing exclusive control of the first instruction and the second instruction.

(Aspect8) The vibration control system according to aspect 1, wherein: a sampling period of the PCM data is the same as a period of the controlling.

(Aspect9) One or more non-transitory computer-readable storage media having stored therein instructions that cause one or more processors of a vibration control apparatus comprising a vibration device configured to reproduce an audio frequency band to perform operations comprising acquiring a first instruction for vibrating the vibration device by specifying an amplitude and a frequency of audio frequencies; acquiring a second instruction for vibrating the vibration device by specifying PCM data; and controlling the vibration device according to each of the first instruction and the second instruction.

(Aspect10) The one or more non-transitory computer-readable storage media according to aspect 9, wherein: the controlling comprises, according to the first instruction, generating control data based on the specified amplitude and the specified frequency, and by using the control data; and the controlling comprises, according to the second instruction, using the PCM data.

(Aspect11) The one or more non-transitory computer-readable storage media according to aspect 9, wherein: the controlling comprises, according to the first instruction, generating control data based on the specified amplitude and the specified frequency, and using the control data; the controlling comprises, according to the second instruction, using the PCM data; and a sampling rate of the PCM data is the same as a period of the control data.

(Aspect12) The one or more non-transitory computer-readable storage media according to aspect 10, wherein: the first instruction is configured to specify the amplitude and the frequency in a first period; the controlling comprises, based on the first instruction, generating the control data in a second period shorter than the first period; and the PCM data has the same sampling period as the second period.

(Aspect13) The one or more non-transitory computer-readable storage media according to aspect 9, wherein: the first instruction is instructed from an external information processing apparatus executing an application program to the vibration control apparatus; and the second instruction is instructed by a processing unit of the vibration control apparatus when an operation in the vibration control apparatus comprising the vibration device is performed.

(Aspect14) One or more non-transitory computer-readable storage media having stored therein instructions that cause one or more processors to perform operations comprising: performing a first instruction to a control unit of a vibration device configured to reproduce audio frequencies for vibrating the vibration device by specifying an amplitude and a frequency of audio frequencies; and performing a second instruction to the control unit for vibrating the vibration device by specifying PCM data.

(Aspect15) A computer-implemented method for controlling a vibration control system comprising a vibration device configured to reproduce audio frequencies, the method comprising: performing selectively or simultaneously a first instruction for vibrating the vibration device by specifying an amplitude and a frequency of audio frequencies and a second instruction for vibrating the vibration device by specifying PCM data; and controlling the vibration device according to each of the first instruction and the second instruction.

(Aspect16) The computer-implemented method according to aspect 15, wherein: the controlling comprises, according to the first instruction, generating control data based on the specified amplitude and the specified frequency, and using the control data; and the controlling comprises, according to the second instruction, using the PCM data.

(Aspect17) The computer-implemented method according to aspect 15, wherein: the first instruction specifies the amplitude and the frequency in a first period; the controlling comprises, based on the first instruction, generating the control data in a second period shorter than the first period; and the PCM data has the same sampling period as the second period.

(Aspect18) The computer-implemented method according to aspect 15, wherein: a sampling period of the PCM data is the same period of the controlling.

The embodiments disclosed herein should be considered in all respects as illustrative and not restrictive. The scope of the present invention is indicated by the scope of the claims rather than by the description made above, and all changes falling within the meaning and scope equivalent to the claims are intended to be embraced therein.

## Claims

1. A vibration control system (10) comprising:
means that issues a streaming playback instruction that sequentially specifies PCM data of a specified sampling rate; and
means that controls a vibration device configured to reproduce audio frequencies using the sequentially specified PCM data in response to the streaming playback instruction.

2. The vibration control system (10) according to claim 1, wherein:
the specified sampling rate of the PCM data is the same as an update cycle of control data used for the controlling.

3. The vibration control system (10) according to claim 1, wherein:
the specified sampling rate of the PCM data is the same as a sampling rate of an amplifier that controls the vibration device.

4. The vibration control system (10) according to claim 1, further comprising:
means that issues a vibration instruction that specifies an amplitude and a frequency; and
means that controls a vibration device comprising generating control data of the vibration device at a specified cycle based on the specified amplitude and the specific frequency according to the vibration instruction, and further controlling the vibration device using the control data.

5. The vibration control system (10) according to claim 4, comprising
an information processing apparatus (100) and a controller, wherein:
the information processing apparatus (100) comprises:
means that transmits sound identification information and sound data to the controller; and
means that issues a preset playback instruction by specifying the sound identification information; and
wherein the controller (200) comprises:
means that stores the transmitted sound identification information and the transmitted sound data in the one or more memories in association with each other; and wherein:
the controlling is performed by reading the sound data corresponding to the specified sound identification information from the one or more memories of the controller according to the preset playback instruction.

6. The vibration control system (10) according to claim 4, wherein:
the vibration instruction is configured to specify the amplitude and the frequency at a first period;
the control data is generated to have a second period shorter than the first period; and
the specified sampling rate of the PCM data is the same as the second period.

7. The vibration control system (10) according to claim 1, comprising
an information processing apparatus (100) and a controller (200); and
wherein the information processing apparatus (100) comprises means that transmits sound identification information and sound data to the controller; and and
wherein the vibration device is configured to reproduce audio frequencies; and
wherein the controller (200) comprises:
an input device,
means that determines whether a specified operation is received at the input device and controlling the vibration device based on first data stored in the one or more memories of the controller; and wherein:
the control based on the specified operation is synthesized with the control based on the streaming playback instruction.

8. The vibration control system (10) according to claim 7, wherein:
at least the control based on the streaming playback instruction is reduced when the control based on the specified operation and the control based on the streaming playback instruction occur simultaneously.

9. A computer program, for vibrating a vibration device configured to reproduce audio frequencies, comprising instructions that when executed to cause one or more processors of to perform operations comprising:
sequentially specifying PCM data of a specified sampling rate that is the same as a control cycle of the vibration device or a sampling rate of an amplifier that controls the vibration device; and
controlling the vibration device using the sequentially specified PCM data.

10. The computer program according to claim 9, wherein:
the operations further comprise:
specifying a vibration instruction specifying an amplitude and a frequency; and
the controlling further comprising generating control data at a specified cycle based on the specified amplitude and the frequency according to the vibration instruction, and
performing control of the vibration device using the control data.

11. The computer program according to claim 10, wherein:
the vibration instruction is configured to specify the amplitude and the frequency at a first period;
the control data is generated to have a second period shorter than the first period; and
the specified sampling rate of the PCM data is the same as the second period.

12. The computer program according to claim 10, wherein:
the operations further comprise exclusively controlling the control based on a streaming playback instruction and the control based on the vibration instruction.

13. A computer-implemented method for vibrating a vibration device configured to reproduce audio frequencies, the method comprising:
sequentially specifying PCM data of a specified sampling rate that is the same as a control cycle of the vibration device or a sampling rate of an amplifier that controls the vibration device; and
controlling the vibration device using the sequentially specified PCM data.

14. The computer-implemented method according to claim 13,
further comprising specifying a vibration instruction specifying an amplitude and a frequency; and
the controlling further comprising generating control data at a specified cycle based on the specified amplitude and the specified frequency according to the vibration instruction, and further controlling the vibration device using the control data.

15. The computer-implemented method according to claim 14, wherein:
the vibration instruction is configured to specify the amplitude and the frequency at a first period;
the control data is generated to have a second period shorter than the first period; and
the specified sampling rate of the PCM data is the same as the second period.
